(19) Europäisches Patentamt
European Patent Office
Office européen des brevets

(11) EP 3 974 057 A1

(12) # EUROPEAN PATENT APPLICATION

published in accordance with Art. 153(4) EPC

(43) Date of publication:
**30.03.2022 Bulletin 2022/13**

(21) Application number: **20808931.8**

(22) Date of filing: **21.05.2020**

(51) International Patent Classification (IPC):
***B01J 20/26*** *(2006.01)* ***B01J 20/30*** *(2006.01)*
***C08F 20/60*** *(2006.01)* ***C08F 220/60*** *(2006.01)*

(52) Cooperative Patent Classification (CPC):
**B01J 20/26; B01J 20/30; C08F 20/60; C08F 220/60**

(86) International application number:
**PCT/JP2020/020079**

(87) International publication number:
**WO 2020/235622 (26.11.2020 Gazette 2020/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.05.2019 JP 2019095510**

(71) Applicant: **Kyushu University, National University Corporation**
**Nishi-ku**
**Fukuoka-shi**
**Fukuoka 819-0395 (JP)**

(72) Inventors:
- **HOSHINO Yu**
  **Fukuoka-shi, Fukuoka 819-0395 (JP)**
- **YAMASHITA Chie**
  **Fukuoka-shi, Fukuoka 819-0395 (JP)**
- **TERAYAMA Yuki**
  **Fukuoka-shi, Fukuoka 819-0395 (JP)**
- **FUJIWARA Tomomi**
  **Fukuoka-shi, Fukuoka 819-0395 (JP)**
- **WATANABE Takeshi**
  **Fukuoka-shi, Fukuoka 819-0395 (JP)**

(74) Representative: **Zimmermann & Partner Patentanwälte mbB**
**Postfach 330 920**
**80069 München (DE)**

(54) **POLYMER MATERIAL AND METHOD FOR PRODUCING SAME, GAS-ABSORBING MATERIAL, AND GAS RECOVERY DEVICE**

(57) The polymer material of the invention is an amine-containing polymer that contains a polymer of a monomer mixture consisting of a monofunctional monomer and more than 10 mol% and 30 mol% or less of a polyfunctional monomer, and exhibits a large reversible gas absorption amount though having a low water content. An efficient production method for the polymer material of the invention includes a polymer synthesis step of synthesizing a polymer by polymerizing monomers in a reaction mixture containing a monofunctional monomer, a polyfunctional monomer, a solvent and an initiator, and an amine infiltration step of infiltrating an amine-containing processing liquid into the polymer, wherein the total monomer concentration in the reaction mixture is 0.7 mol/L or more, the proportion of the polyfunctional monomer among the monomers contained in the reaction mixture is 10 to 30 mol%. When the monofunctional monomer has an amino group, the amine infiltration step can be omitted.

FIG. 1

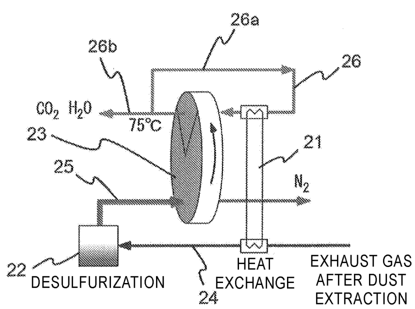


EP 3 974 057 A1

## Description

### Technical Field

The present invention relates to a polymer material and a method for producing the same.

### Background Art

In recent years, global warming due to carbon dioxide discharged from facilities such as thermal power plants, iron plants and cement plants, and environmental pollution due to harmful gases such as hydrogen sulfide have become problematic. In order to prevent the influence of such gases, research and development for separating and recovering gases have been progressed. Among these, studies on gas absorbents and gas separators using reversible gas absorption performance of polymer particles synthesized by polymerizing a monomer having an amino group and a monomer having a hydrophobic group are also found.

For example, PTL 1 and PTL 2 describe production of polymer particles by adding 2,2'-azobis(2-methylpropionamidine) dihydrochloride as an initiator to a monomer mixture (total monomer concentration: 0.312 mol/L) prepared by dissolving 55 mol% of N-(dimethylaminopropyl)methacrylamide, 43 mol% of N-tert-butylacrylamide, and 2 mol% of N,N'-methylenebisacrylamide in water, reacting them and freeze-drying the resultant polymer. These further show that the produced polymer particles can be formed into a film according to a method of applying an aqueous dispersion thereof to a porous material by spray-coating thereon and the resultant film is useful as a reversible gas-absorbing material that absorbs carbon dioxide and subsequently desorbs carbon dioxide by heating.

### Citation List

### Patent Literature

PTL 1: WO2016/024633
PTL 2: WO2017/146231

### Summary of Invention

### Technical Problem

The present inventors have made studies for the purpose of developing a polymer material having reversible gas absorption performance and having a low water content, and at the same time, providing a method for efficiently producing the polymer material.

### Solution to Problem

Specifically, the present invention provides the following solutions.

[1] An amine-containing polymer material that contains a polymer of a monomer mixture consisting of a monofunctional monomer and more than 10 mol% and 30 mol% or less of a polyfunctional monomer.
[2] The polymer material according to [1], wherein the monofunctional monomer has an amino group.
[3] The polymer material according to [1] or [2], wherein the polyfunctional monomer is an N,N'-alkylenebis(meth)acrylamide.
[4] The polymer material according to [1] or [2], wherein the polyfunctional monomer has an amino group.
[5] The polymer material according to [1] or [2], wherein the polyfunctional monomer has plural amino groups.
[6] The polymer material according to any one of [1] to [5], wherein the polymer is a polymer prepared by polymerization using 2,2'-azobis(2-methylpropionitrile) as an initiator.
[7] The polymer material according to any one of [1] to [6], wherein the polymer is a polymer prepared by polymerization in the presence of a surfactant.
[8] The polymer material according to any one of [1] to [7], containing a surfactant.
[9] The polymer material according to [7] or [8], wherein the surfactant is cetyltrimethylammonium bromide.
[10] The polymer material according to any one of [1] to [9], which is a ground product.

[11] The polymer material according to any one of [1] to [10], which is a filtrand.
[12] The polymer material according to any one of [1] to [11], which is a dried product.
[13] The polymer material according to any one of [1] to [12], wherein the polymer is a polymer prepared by polymerization using water and an alcohol as solvents.
[14] The polymer material according to any one of [1] to [13], wherein the monomer mixture contains a monomer having a hydrophobic group.
[15] The polymer material according to any one of [1] to [14], which is a polymer material for gas absorption.
[16] The polymer material according to any one of [1] to [15], which is a polymer material for carbon dioxide gas absorption.
[17] The polymer material according to any one of [1] to [16], which can reversibly absorb carbon dioxide gas.
[18] The polymer material according to any one of [1] to [17], wherein when one gram of a dry polymer is immersed in water overnight at 30°C, the water content of the polymer is 3 g or less.
[19] A method for producing a polymer material including:

a polymer synthesis step of synthesizing a polymer by polymerizing monomers in a reaction mixture containing a monofunctional monomer, a polyfunctional monomer, a solvent and an initiator, and
an amine infiltration step of infiltrating an amine-containing processing liquid into the polymer, wherein:

the total monomer concentration in the reaction mixture is 0.7 mol/L or more,
the proportion of the polyfunctional monomer among the monomers contained in the reaction mixture is 10 to 30 mol%, and
when the monofunctional monomer has an amino group, the amine infiltration step can be omitted.

[20] The method for producing a polymer material according to [19], wherein the monofunctional monomer has an amino group, and the amine infiltration step is carried out.
[21] The method for producing a polymer material according to [19], wherein the monofunctional monomer has an amino group, and the amine infiltration step is omitted.
[22] The method for producing a polymer material according to any one of [19] to [21], wherein the polyfunctional monomer is an N,N'-alkylenebis(meth)acrylamide.
[23] The method for producing a polymer material according to any one of [19] to [21], wherein the polyfunctional monomer has an amino group.
[24] The method for producing a polymer material according to any one of [19] to [21], wherein the polyfunctional monomer has plural amino groups.
[25] The method for producing a polymer material according to any one of [19] to [24], wherein the initiator is 2,2'-azobis(2-methylpropionitrile).
[26] The method for producing a polymer material according to any one of [19] to [25], wherein the reaction mixture contains a surfactant.
[27] The method for producing a polymer material according to [26], wherein the surfactant is cetyltrimethylammonium bromide.
[28] The method for producing a polymer material according to any one of [19] to [27], wherein the polymer obtained in the polymer synthesis step is ground.
[29] The method for producing a polymer material according to any one of [19] to [28], wherein the polymer obtained in the polymer synthesis step is filtered.
[30] The method for producing a polymer material according to any one of [19] to [29], wherein the polymer obtained in the polymer synthesis step is dried.
[31] The method for producing a polymer material according to any one of [19] to [30], wherein water and an alcohol are used as solvents.
[32] The method for producing a polymer material according to any one of [19] to [31], wherein the reaction mixture contains a monomer having a hydrophobic group.
[33] The method for producing a polymer material according to [32], which includes, before the polymer synthesis step, a step of heating a mixture containing an amino group-having monomer, a polyfunctional monomer and water and then adding a monomer having a hydrophobic group to the mixture.
[34] The method for producing a polymer material according to [33], wherein the hydrophobic group-having monomer is added as an alcohol solution thereof.
[35] The method for producing a polymer material according to any one of [32] to [34], wherein the total monomer concentration in the reaction mixture is 3 mol/L or less.
[36] The method for producing a polymer material according to any one of [19] to [35], which is a production method for a polymer material for a gas-absorbing material.

[37] The method for producing a polymer material according to any one of [19] to [36], which is a production method for a polymer material for carbon dioxide gas absorption.

[38] The method for producing a polymer material according to any one of [19] to [36], which is a production method for a polymer material capable of reversibly absorbing carbon dioxide gas.

[39] The method for producing a polymer material according to [38], which is a production method for a polymer material such that, when one gram of a dry polymer is immersed in water overnight at 30°C, the water content of the polymer is 3 g or less.

[40] A polymer material produced according to the production method of any one of [19] to [39].

[41] A gas-absorbing material produced according to the production method of any one of [19] to [39].

[42] The gas-absorbing material according to [41], further containing a thermoplastic resin.

[43] The gas-absorbing material according to [42], wherein the thermoplastic resin is a polyethylene.

[44] The gas-absorbing material according to any one of [41] to [43], further containing a filler.

[45] The gas-absorbing material according to [44], wherein the filler has gas adsorption performance.

[46] The gas-absorbing material according to [44] of [45], wherein the filler is a powder.

[47] The gas-absorbing material according to any one of [44] to [46], wherein the filler is fine particles having a primary particle diameter of 1000 nm or less.

[48] The gas-absorbing material according to any one of [44] to [47], wherein the water contact angle of the fine particles is 70° or more.

[49] The gas-absorbing material according to any one of [44] to [48], wherein the filler is a carbon black.

[50] The gas-absorbing material according to any one of [44] to [48], wherein the filler is a water repellent-treated carbon black.

[51] The gas-absorbing material according to any one of [44] to [48], wherein the filler is a fumed silica.

[52] The gas-absorbing material according to any one of [44] to [48], wherein the filler is a fumed silica treated for water repellency.

[53] The gas-absorbing material according to any one of [44] to [48], wherein the filler is a fluorinated resin powder.

[54] The gas-absorbing material according to any one of [44] to [48], wherein the filler is a Teflon (registered trademark) powder.

[55] The gas-absorbing material according to any one of [44] to [48], wherein the filler is an active carbon or zeolite.

[56] The gas-absorbing material according to any one of [44] to [55], swollen with water.

[57] The gas-absorbing material according to any one of [44] to [56], hydrated with water vapor.

[58] The gas-absorbing material according to [57], wherein a carbon dioxide gas or a bicarbonate ion is added during hydration.

[59] A gas-absorbing cartridge filled with a gas-absorbing material of any one of [41] to [58].

[60] A gas supply unit containing a gas-absorbing material of any one of [41] to [58].

[61] A gas recovery unit containing a gas-absorbing material of any one of [41] to [58].

[62] The gas recovery unit according to [61], wherein a gas is absorbed by the gas-absorbing material, and then the temperature of the gas-absorbing material is increased to desorb the gas.

[63] The gas recovery unit according to [61], wherein a gas is absorbed and stored by the gas-absorbing material, and then the partial pressure of the gas is lowered to desorb the gas.

[64] The gas recovery unit according to [61], wherein a gas is absorbed by the gas-absorbing material, and then a water vapor is circulated therethrough to desorb the gas.

[65] The gas recovery unit according to [61], wherein a gas is absorbed by the gas-absorbing material, and then water at a high temperature is circulated therethrough to desorb the gas.

[66] The gas recovery unit according to any one of [61] to [65], wherein, when a gas is absorbed by the gas-absorbing material, the temperature increase of the gas-absorbing material by the gas absorption reaction heat caused by water vaporization from the gas-absorbing material is suppressed.

[67] The gas recovery unit according to any one of [61] to [66], wherein, when a gas is absorbed by the gas-absorbing material, a dry gas is circulated therethrough to lower the temperature of the gas-absorbing material.

[68] The gas recovery unit according to any one of [61] to [67], wherein the gas is an acidic gas.

[69] The gas recovery unit according to any one of [61] to [67], wherein the gas is a carbon dioxide gas.

[70] The gas recovery unit according to any one of [61] to [67], wherein the gas is a water vapor.

Advantageous Effects of Invention

According to the production method for a polymer material of the present invention, a polymer material having reversible gas absorption performance and a low water content can be produced, and the produced polymer material can be effectively used as a reversible gas-absorbing material. The gas recovery unit using a gas-absorbing material of the present invention can efficiently recover an acidic gas such as carbon dioxide, and water vapor.

Brief Description of Drawings

[Fig. 1] This is a schematic view showing a first embodiment of the gas recovery unit of the present invention.
[Fig. 2] This is a schematic view showing a second embodiment of the gas recovery unit of the present invention.
[Fig. 3] This shows a particle size distribution of a mixture (fine particles-containing polymer material) of a different type of a polymer ground product and RY300.
[Fig. 4] This is a graph showing a $CO_2$ absorption amount in an absorption step and a $CO_2$ desorption amount in an desorption step of a fine particles-containing polymer material that contains a polymer ground product ground at an opening degree of 2.1 mm and RY300 (sample 18), and a polymer ground product ground at an opening degree of 2.1 mm (sample 19).
[Fig. 5] This is a graph showing a $CO_2$ absorption amount in an absorption step of a fine particles-containing polymer material that contains a ground product of an amino group-containing polymer as ground at an opening degree of 2.1 mm and RY300 (sample 18), and a ground product, as ground with a bead mill, of a mixture of a polymer ground product ground at an opening degree of 4.5 mm and RY 300 (sample 20).

Description of Embodiments

Hereinunder the present invention is described in detail. The description of the constitutive elements given hereinunder is for some typical embodiments or examples, to which, however, the present invention should not be limited. In this description, the numerical range expressed by a wording "a number to another number" means a range that falls between the former number indicating the lower limit of the range and the latter number indicating the upper limit thereof. Also in this description, "(meth)acrylamide" means "acrylamide" and "methacrylamide", and "(meth)acrylate" means "acrylate" and "methacrylate".

<Polymer Material>

The polymer material can be, for example, an amine-containing polymer material that contains a polymer of a monomer mixture consisting of a monofunctional monomer and more than 10 mol% and 30 mol% or less of a polyfunctional monomer.
The proportion of the polyfunctional monomer in the monomer mixture can be more than 10 mol% and 30 mol% or less, and can also be 15 mol% or more and 30 mol% or less.
The polymer material can be, for example, appropriately crosslinked, or can be polymerized under a condition not causing any excessive swelling, and can still have a low water content even after immersed in water and has a large amount of an amine to increase the reversible absorption amount of an acidic gas such as carbon dioxide gas and water vapor.
Even under a condition having a high humidity, the polymer material enables reversible absorption of a large amount of an acidic gas. Even when used in a high-humidity environment, the polymer material can swell by appropriate hydration, and can be used for a long period of time at a high filling rate per unit volume.
Also with no excessive hydration, the polymer material may not require any superfluous energy for water temperature control in desorption of a gas such as carbon dioxide by temperature control by heating or the like.
The polymer material can be efficiently produced according to the following production method.

<Production Method for Polymer Material>

The production method for the polymer material includes, for example, a polymer synthesis step of synthesizing a polymer by polymerizing monomers in a reaction mixture containing a monofunctional monomer, a polyfunctional monomer, a solvent and an initiator, and an amine infiltration step of infiltrating an amine-containing processing liquid into the polymer, wherein the total monomer concentration in the reaction mixture can be 0.7 mol/L or more, and the proportion of the polyfunctional monomer among the monomers contained in the reaction mixture can be more than 10 mol% and 30 mol% or less.
However, in the case where the monofunctional monomer has an amino group, the amine infiltration step can be omitted.
In the polymer material production method, the total monomer concentration in the reaction mixture and the proportion of the polyfunctional monomer each are controlled to fall within the above-mentioned range, and a polymer material having a low water content and having a large reversible gas absorption amount can be produced efficiently.
In addition, a sufficient amount of a polymer can be synthesized using a relatively small amount of a solvent,

and the production apparatus can be prevented from being large-scaled.

The resultant polymer material is poorly swellable, and therefore when formed into a gas-absorbing material or a gas-separating material, the volume filling ratio can be sufficiently large.

In the following, the steps are described in detail.

[1] Polymer Synthesis Step

In this step, monomers in a reaction mixture containing a monofunctional monomer, a polyfunctional monomer, a solvent and an initiator are polymerized to give a polymer.

In the following, the monomers, the solvent and the initiator used in the polymer synthesis step, a surfactant optionally used in the step, as well as the polymerization reaction condition and post-treatment for the polymer are described.

[Monofunctional Monomer]

"Monofunctional monomer" is, for example, a monomer having only one polymerizable group in the molecule. The polymerizable group includes, for example, a polymerizable group having an ethylenically unsaturated group such as a vinyl group, an acryloyl group, a methacryloyl group and a styrenyl group.

The reversible gas absorption performance of the polymer produced is expressed, for example, by reaction of an amino group and a gas component, or by reaction of an amino group, a gas component and water, and the monofunctional monomer for use herein may be one having an amino group or may also be one not having an amino group.

Also, a monofunctional monomer not having an amino group and a monofunctional monomer having an amino group may be used as combined.

In the case where an amino group-having monofunctional monomer is used, "amine infiltration step" to be described hereinunder can be omitted.

The monofunctional monomer not having an amino group includes, for example, acrylamide, methacrylamide, acrylic acid, acrylic acid salts, methacrylic acid, methacrylic acid salts, 2-acrylamide-2-methylpropanesulfonic acid, 2-acrylamide-2-methylpropanesulfonic acid salts, N-alkylacrylamide, N-alkylmethacrylamide, alkyl acrylate, alkyl methacrylate, N,N-dialkylacrylamide, N-(hydroxyalkyl)acrylamide, (hydroxyalkyl) acrylate, N,N-dialkylmethacrylamide, N-(hydroxyalkyl)methacrylamide, and (hydroxyalkyl) methacrylate. In addition, other substituted (meth)acrylamides can also be used.

Specific examples of the monofunctional monomer not having an amino group include N-methylacrylamide, N-ethylacrylamide, N-propylacrylamide, N-methylmethacrylamide, N-ethylmethacrylamide, N-propylmethacrylamide, methyl acrylate, ethyl acrylate, propyl acrylate, methyl methacrylate, ethyl methacrylate, propyl methacrylate, N,N-dimethylacrylamide, N,N-diethylacrylamide, N,N-dipropylacrylamide, N,N-dimethylmethacrylamide, N,N-diethylmethacrylamide, and N,N-dipropylmethacrylamide.

Here, the terminal propyl group may be an n-propyl group or an isopropyl group.

One alone or two or more kinds of these monomers not having an amino group can be used either singly or as combined.

In the case where the monofunctional group has an amino group, the amino group may be any of a primary amino group, a secondary amino group or a tertiary amino group.

"Amino group" may not mean an amino group to constitute an amide structure ($-CO-NR_2$: R represents a hydrogen atom or a substituent).

The amino group that the monofunctional monomer has can be planned to have an acid dissociation constant (pKa) as a conjugated acid.

From the viewpoint of increasing the carbon dioxide absorption efficiency of the polymer produced, the acid dissociation constant (pKa) of the amino group in an environment to absorb carbon dioxide is equal to or higher than the acid dissociation constant (pKa) of carbonic acid.

A primary amino group or some type of a secondary amino group may form a strong covalent bond with carbon dioxide, and could not desorb once absorbed carbon dioxide.

Consequently, in the case where the monofunctional monomer has an amino group, the amino group can be a secondary amino group or a tertiary amino group among amino groups, can be a secondary amino group or a tertiary amino group having a hydroxy group, an amide group or an alkyl group in the vicinity thereof, or can be a dialkylamino group such as a dimethylamino group.

The monofunctional monomer for use herein can have a cyclic amine such as piperidine or piperazine or a derivative thereof as an amine.

In the case where the acid dissociation constant of the amino group is too high, carbon dioxide could not efficiently desorb in the desorption step, as the case may be.

Consequently, a monomer having a hydrophobic side chain can be copolymerized along with the amino group-having monomer, or a certain amount of a polyfunctional monomer can be introduced to provide an environment where the area around the amino group in the gel is crowded.

The amino group in the monofunctional monomer may bond to the part that constitutes the main chain of the polymer, or may bond to the part constituting the side chain thereof, and can bond to the part constituting the side chain.

Though not specifically defined, the number of the amino groups that the monofunctional monomer has may be one or may be 2 or more.

In the case of a monomer having 2 or more amino groups, the amino groups may be the same or different.

The amino group-having monomer includes, for example, N-(aminoalkyl)acrylamide, N-(aminoalkyl)methacrylamide, aminoalkyl acrylate, and aminoalkyl methacrylate.

In these monomers, the amino group may be substituted with a substituent such as an alkyl group.

Specific examples of the amino group-having monomer include N,N-dimethylaminopropylmethacrylamide, N,N-diethylaminopropylmethacrylamide, N,N-dimethylaminoethylmethacrylamide, N,N-diethylaminoethylmethacrylamide, N,N-dimethylaminopropyl methacrylate, N,-diethylaminopropyl methacrylate, N,N-dimethylaminoethyl methacrylate, N,N-diethylaminoethyl methacrylate, N,N-dimethylaminopropylacrylamide, N,N-diethylaminopropylacrylamide, N,N-dimethylaminoethylacrylamide, N,N-diethylaminoethylacrylamide, 3-aminopropylmethacrylamide, 3-aminopropylacrylamide, N,N-dimethylaminopropyl acrylate, N,N-diethylaminopropyl acrylate, N,N-dimethylaminoethyl acrylate, N,N-diethylaminoethyl acrylate, 3-aminopropyl methacrylate, and 3-aminopropyl acrylate.

The monomers may also be salts of these compounds and acidic substances, for example, hydrochlorides or bicarbonates. The monomers may also be acrylamides synthesized by condensing a commercial product of an oligoamine or polyamide having a primary amine or a secondary amine with acrylic acid or methacrylic acid or a derivative thereof.

In addition, ethyleneimine, vinylamine, allylamine, and allylamine hydrochloride can also be used as the monomer having an amino group.

One alone or two or more kinds of these amino group-having monofunctional monomers can be used either singly or as combined.

[Polyfunctional Monomer]

"Polyfunctional monomer" is, for example, a monomer having 2 or more polymerizable groups in the molecule. For specific examples of the polymerizable group, reference may be made to the description in the section of [Monofunctional Monomer]. Not specifically defined, the number of the polymerizable groups that the polyfunctional monomer has can be 2 to 6, or 2 to 5, or 2 to 4, or 2. Plural polymerizable groups that the polyfunctional monomer has may be the same or different. When the reaction mixture contains a polyfunctional monomer in a specific ratio, a crosslinked structure can be formed between polymer chains and a hard polymer of which the water content and the swelling degree are suppressed can be obtained.

By polymerizing an appropriate amount of a polyfunctional monomer and an amino group-having monomer, hydrophobicity or steric hindrance can be introduced around the amino group to lower the acid dissociation constant of the amino group in a carbon dioxide desorption condition, thereby synthesizing a material that enables efficient carbon dioxide desorption. At that time, when the amount of the polyfunctional monomer is too much, the acid dissociation constant of the amino group in a carbon dioxide absorption constant may lower to reduce the carbon dioxide absorption amount of the resultant polymer. Consequently, it is important to appropriately plan the amount of the polyfunctional monomer to be introduced.

The polyfunctional monomer includes, for example, a polyfunctional (meth)acrylamide-type monomer, a polyfunctional (meth)acrylate-type monomer, and a crosslinking agent such as a titanium-based crosslinking agent. An acrylamide-type monomer (acrylamide derivative) having two polymerizable groups is also employable. Examples of the acrylamide-type monomer having 2 polymerizable groups include N,N'-alkylenebis(meth)acrylamide. Here, the carbon number of the alkylene group of N,N'-alkylenebis(meth)acrylamide can be, though not specifically defined, 1 to 12, or 1 to 4, or 1 to 2. Specific examples of the acrylamide derivative having 2 polymerizable groups include N,N'-methylenebis(acrylamide (BIS). A crosslinking agent having a linear or cyclic crosslinking chain having an amino group in place of an alkylene group, such as oligoethyleneimine, N,N'-bis(2-aminoethyl)-1,3-propanediamine, iminobispropylamine, methyliminobispropylamine and 1,4-(bisaminopropyl)piperazine, can also be used as the polyfunctional monomer. Similarly, a crosslinking agent where an oligoethylene glycol constitutes a crosslinking chain in place of an alkylene group is also usable as the polyfunctional monomer. Specific examples of the polyfunctional (meth)acrylate-type monomer include ethylene glycol dimethacrylate (EGDMA).

One alone or two or more kinds of these polyfunctional monomers can be used either singly or as combined.

[Hydrophobic Group-having Monomer]

The reaction mixture can contain a monomer having a hydrophobic group.
"Hydrophobic group" can mean a functional group hardly soluble in water, such as an alkyl group or a phenyl group.
The hydrophobic group-having monomer can be, for example, a monofunctional monomer having a hydrophobic group and not having an amino group, or can also be a polyfunctional monomer having a hydrophobic group.
A monofunctional monomer having both a hydrophobic group and an amino group is grouped in "amino group-having monofunctional monomer", while a polyfunctional monomer having a hydrophobic group can be grouped in "polyfunctional monomer". Accordingly, a monofunctional monomer having a hydrophobic group and not having an amino group is referred to as "hydrophobic group-having monofunctional monomer".
The hydrophobic group that the monomer has is, for example, a hydrocarbon group represented by $C_XH_{2X}$ or $C_XH_{2X+1}$ (where X is an integer), and includes a methyl group, an ethyl group, a propyl group, an isopropyl group, a butyl group, an isobutyl group, a tert-butyl group, a pentyl group, a cyclopentyl group, an isopentyl group, a hexyl group, and a cyclohexyl group. In the hydrophobic group, the hydrogen atom can be substituted with a hydroxy group to form a hydroxyethyl group, a hydroxypropyl group or a hydroxybutyl group.
The hydrophobic group in the monomer may bond to the part constituting the main chain of a polymer, or may bond to the part constituting a side chain thereof, but can bond to the part constituting a side chain. Not specifically defined, the number of the hydrophobic groups that the monomer has may be 1, or may be 2 or more. In the case where the monomer has 2 or more hydrophobic groups, the hydrophobic groups may be the same or different.
Specific examples of the hydrophobic group-having monomer include N-alkylacrylamide, N-alkylmethacrylamide, alkyl acrylate, alkyl methacrylate, N,N-dialkylacrylamide, N-(hydroxyalkyl)acrylamide, (hydroxyalkyl) acrylate, N,N-dialkylmethacrylamide, N-(hydroxyalkyl)methacrylamide, (hydroxyalkyl) methacrylate, N-phenylmethacrylamide, and N-phenyl methacrylate.
One alone or two or more kinds of these hydrophobic group-having monomers can be used either singly or as combined.

[Combination of Monomers]

The combination of a monofunctional monomer and a polyfunctional monomer includes, for example, a combination of an amino group-having monofunctional monomer and a polyfunctional monomer, a combination of a monofunctional monomer having neither an amino group nor a hydrophobic group, and a polyfunctional monomer, a combination of a hydrophobic group-having monofunctional monomer and a polyfunctional monomer, a combination of an amino group-having monofunctional monomer, a hydrophobic group-having monofunctional monomer, and a polyfunctional monomer, and a combination of an amino group-having monofunctional monomer, a monofunctional monomer having neither an amino group nor a hydrophobic group, and a polyfunctional monomer.
The combination of an amino group-having monofunctional monomer and a polyfunctional monomer includes a combination of an N-(aminoalkyl)(meth)acrylamide, and an acrylamide derivative having two polymerizable groups or a (meth)acrylate having two polymerizable groups. Specific examples thereof include a combination of N,N-dimethylaminopropyl(meth)acrylamide (DMAPM) and N,N'-methylenebisacrylamide (BIS).
The combination of an amino group-having monofunctional monomer, a hydrophobic group-having monofunctional monomer and a polyfunctional monomer includes a combination of an N-(aminoalkyl)(meth)acrylamide, an N-alkyl(meth)acrylamide, and an acrylamide derivative having two polymerizable groups or a (meth)acrylate having two polymerizable groups. Specific examples thereof include a combination of N,N-dimethylaminopropyl(meth)acrylamide (DMAPM), N-tert-butylacrylamide (TBAm) and N,N'-methylenebisacrylamide (BIS).
A combination of a monofunctional monomer having neither an amino group nor a hydrophobic group and a polyfunctional monomer includes a combination of an N,N-dialkyl(meth)acrylamide, and an acrylamide derivative having two polymerizable groups or a (meth)acrylate having two polymerizable groups, and a combination of an N-alkyl(meth)acrylamide, and an acrylamide derivative having two polymerizable groups or a (meth)acrylate having two polymerizable groups. Specific examples thereof include a combination of N,N-dimethyl(meth)acrylamide (DMAm) and N,N'-methylenebisacrylamide (BIS), and a combination of N-isopropylacrylamide (NiPAm) and N,N'-methylenebisacrylamide (BIS).

[Solvent]

The solvent functions as a reaction medium for polymerization. Containing a solvent, the reaction mixture can synthesize a polymer in a state having an appropriate space around the amino group inside the polymer. Consequently, the polymer to be obtained through polymerization with an appropriate solvent added can tend to have increased reversible gas absorption performance.

The solvent includes a polar solvent such as water, alcohols (methanol, ethanol, isopropanol), and dimethyl sulfoxide. A mixed solvent of a combination of two or more kinds of these polar solvents can be used. Also, water or a mixed solvent of water and any other polar solvent is usable, and a mixed solvent of water and an alcohol can be used, water and ethanol can be used, and a mixed solvent of water and methanol can be used. The blending ratio by volume of water and alcohol (water/alcohol) can be 1/0 to 1/1, or 1/0.2 to 1/0.8, or 1/0.3 to 1/0.5. The solvent can include salts and polymer soluble in the solvent.

[Initiator]

The initiator is a compound to be added for initiating polymerization of monomers, for which a compound capable of changing into a highly-reactive intermediate by energy application thereto can be used. Examples thereof include a thermal polymerization initiator that generates an active species such as a radical or a cation by heating, and a photopolymerization initiator that generates an active species such as a radical, a cation or an anion by photoirradiation. The thermal radical polymerization initiator includes azo compounds such as 2,2'-azobis(2-methylpropionitrile) (AIBN), 2,2'-azobisbutyronitrile, 2,2'-azobis(2,4-dimethylvaleronitrile) (V-65), and 2,2'-azobis(4-methoxy-2,4-dimethylvaleronitrile) (V-70); and peroxides such as benzoyl peroxide, tert-butylhydroperoxide, hydrogen peroxide solution, persulfates, and tert-butylhydroperoxide + ferrous sulfate. The thermal cationic polymerization initiator includes benzenesulfonate esters and alkylsulfonium salts. Also mentioned is an initiator capable of generating a radical by UV irradiation or electron beam irradiation, which includes benzoin derivatives, benzyl derivatives, acetophenone derivatives, benzophenone derivatives and azo derivatives.

The initiator such as AIBN can be used after purification (recrystallization), or can also be used without purification.

[Surfactant]

Optionally, a surfactant can be added to the reaction mixture. With that, a uniform polymer can be synthesized.

As the additive, usable are amphipathic polymers such as polyethylene oxide, polyvinylpyrrolidone and polyvinyl alcohol, oligomers thereof, and ionic surfactants such as cetyltrimethylammonium bromide.

[Polymerization Reaction]

According to the production method, monomers are polymerized in the above-mentioned reaction mixture containing a monofunctional monomer, a polyfunctional monomer, a solvent and an initiator to give a polymer, and at that time, the total monomer concentration in the reaction mixture can be 0.7 mol/L or more, and the proportion of the polyfunctional monomer among the monomers in the reaction mixture can be more than 10 mol% and 30 mol% or less. Here, "total monomer concentration" in the reaction mixture can be, for example, a total molar number per liter of all the monomers that the reaction mixture contains.

When the monomers are polymerized in the reaction mixture, a polymer that has a polymer chain containing a structural unit derived from the monofunctional monomer and a crosslinked structure derived from the polyfunctional monomer can be synthesized. At that time, in the production method, the total monomer concentration in the reaction mixture can be set relatively high at 0.7 mol/L or more, and in the reaction mixture having a limited volume, the polymer chains can efficiently form non-covalent-bonding crosslinking points by interaction or entanglement thereof, and further, the monomers can be polymerized in a state where the structure is stabilized by covalent-bonding crosslinking by the crosslinking agent. As a result, the resultant polymer does not too much hydrate or deform in a wet state. A polymer that is poorly swellable and has a high reversible gas absorption yield per unit volume can be synthesized at a high yield.

In addition, the total monomer concentration can be 0.7 mol/L or more, and the proportion of the polyfunctional monomer among the monomers can be 10 mol% or more, and a relatively dense crosslinked structure can be formed between polymer chains. Accordingly, a hard polymer that has a lower water content and is more poorly swellable can be obtained. Further, the upper limit of the total monomer concentration can be 4 mol/L, and the upper limit of the proportion of the polyfunctional monomer can be 30 mol%, and accordingly, reduction in the reversible gas absorption amount per mass to be caused by these concentrations being excessively high can be suppressed. Thus, a polymer material having a large reversible gas absorption amount per unit volume can be produced efficiently.

The total monomer concentration in the reaction mixture can be, for example, 1.0 to 2.8 mol/L, or 1.5 to 3 mol/L.

The proportion of the polyfunctional monomer among the monomers is, for example, more than 10 mol% and 30 mol% or less, and and can be 15 mol% or more and 30 mol% or less.

In the case where an amino group-having monofunctional monomer is contained in the reaction mixture, the proportion of the amino group-having monofunctional monomer among the monomers therein can be, for example, 1 to 95 mol%, or 9 to 90 mol%, or 30 to 85 mol%.

In the case where a hydrophobic group-having monofunctional monomer is contained in the reaction mixture, the proportion of the hydrophobic group-having monofunctional monomer among the monomers therein can be, for example, 1 to 50 mol%, or 5 to 45 mol%, or 10 to 43 mol%.

In the case where an amino group-having monofunctional monomer and a hydrophobic group-having monofunctional monomer are contained in the reaction mixture, the molar ratio of the amino group-having monofunctional monomer and the hydrophobic group-having monofunctional monomer can be, for example, 95/5 to 5/95, or 3/1 to 1/2.

The process of mixing the components to constitute the reaction mixture is not specifically limited. In the case where an amino group-having monofunctional monomer and a hydrophobic group-having monofunctional monomer are used as combined, a mixture containing an amino group-having monofunctional monomer and a polyfunctional monomer and water is heated, and then a hydrophobic group-having monofunctional monomer can be added to the mixture, or a hydrophobic group-having monofunctional monomer can be added to the mixture as an alcohol solution thereof. In that manner, the monomers can be uniformly mixed while suppressing the solvent amount.

The reaction temperature of the reaction mixture can be, for example, 0 to 200°C, or 30 to 120°C, or 50 to 105°C.

The reaction time can be, for example, 0.1 to 5 hours, or 0.2 to 3 hours.

[Post-treatment of Polymer]

In the production method of the present invention, a poorly swellable polymer forms as a precipitate in the reaction liquid, or the whole reaction liquid gels. The formed polymer may be mechanically ground into a slurry or a powder, or the liquid component may be removed from the reaction liquid and the residual precipitate (polymer) may be mechanically ground into a powder. Also the resultant powder may be suspended in a dispersion medium to prepare a slurry.

Various grinding machines can be used for grinding the gel. For example, a jaw crusher, a gyratory crusher, an impact crusher, a roll crusher, an edge runner, a disintegrator, a SAG mill, an autogenous mill, a ball mill, a rod mill, a jet mill, a grinding machine, an extrusion/shear grinding machine, a meat chopper, and a Fitz mill can be used.

Also, the prepared slurry may be applied and dried to form a porous film of a polymer powder, or the slurry may be filtered to make a polymer film remain on the filter, and the resultant film may be dried to form a polymer film or a polymer packed bed.

Polymer particles used in a conventional gas-absorbing material may swell to clog the space around the particles when the particles absorb water to swell. Consequently, it is difficult to remove water from the space around the particles, and the particles are difficult to filter and dry. As opposed to this, the polymer powder in the present invention is poorly swellable and can be readily formed into a film or a packed bed by a method of filtration or the like. The polymer thus formed or packed in the form of a film can be, after once stored, redispersed in water and formed into a film or a packed bed, or can be kneaded with a resin and then shaped.

The slurry coating method includes, for example, a papermaking method, a spray coating method, a casting method, a bar coating method, a roll coating method, a wire bar coating method, and a dip coating method.

The polymer precipitate formed in the reaction mixture, or the powder, the slurry and the film prepared form the precipitate can be freeze-dried or spray-dried. Or these may be dried with hot air, using a fluidized bed. The polymer in the present invention does not absorb too much water and can maintain appropriate swellability even when it is again dispersed in water after freeze-dried. In swelling again, after once dried, an acid such as hydrochloric acid or carbon dioxide may be added. A poorly volatile and highly hydrophilic resin such as polyethylene glycol or glycerin may be added in drying for the purpose of accelerating reswelling.

A powder, a slurry or a film formed of a polymer precipitate, or a freeze-dried product formed from these may be washed, as needed, and can be sued as a gas-absorbing material to be mentioned below.

[2] Amine Infiltration Step

In the production method of the present invention, a processing liquid containing an amine (hereinafter referred to as "amine-containing processing liquid") may be infiltrated into the polymer obtained in the polymer synthesis step [1] to give a polymer material. However, in the case where an amino group-containing monofunctional monomer is used in the polymer synthesis step [1], the amine infiltration step may be omitted.

When an amine-containing processing liquid is infiltrated into the polymer, the amine-containing processing liquid can penetrate and diffuse between the polymer chains to make the polymer contain the amine. At that time, the polymer obtained in the above-mentioned polymer synthesis step hardly swells even when the amine-containing processing liquid is infiltrated thereinto and can still be in a hard state, because a relatively dense crosslinked structure is formed between the polymer chains therein. The polymer material thus produced exhibits excellent reversible gas absorption performance, because the polymer therein is suppressed from swelling to facilitate good gas diffusion in filling and because the amino group of the amine and the amino group derived from the monofunctional monomer effectively

function as a functional group that enables reversible gas absorption.
Hereinunder the amine-containing processing liquid for use in the amine infiltration step and the condition for amine infiltration treatment are described.

[Amine-Containing Processing Liquid]

The amine-containing processing liquid for use in the amine infiltration step may be a liquid material that contains an amine, and may be, for example, an amine solution prepared by dissolving an amine in a solvent, or a liquid amine. Also the amine-containing processing liquid may contain an appropriate amount of water.

(Amine)

The amine to be contained in the amine-containing processing liquid may be any of a low-molecular amine or a high-molecular amine.
The molecular weight of the amine can be, for example, 61 to 10000, or 75 to 1000, or 90 to 500.
Regarding the description and specific examples of the compound usable as an amine, reference may be made to the description and specific examples of the low-molecular amine in the description of an absorption accelerator and a diffusion accelerator to be given hereinunder.

(Solvent)

In the case where an amine solution is used as the amine-containing processing liquid, an amine as a solute can be dissolved in a solvent, and a solvent having high compatibility with polymer and having high solubility of carbon dioxide and bicarbonate ion can be used. Specifically, the solvent includes water, ethylene glycol and glycerin, and may be a mixed solvent of a combination of two or more of these solvents.
The concentration of amine in the amine solution can be, for example, 0.1 to 12 N, or 1 to 10 N or 3 to 9 N, in terms of the amine concentration.

(Other Components)

Any other components than amine and solvent (other components) can be added to the amine-containing processing liquid. The other components include an oxidation inhibitor and an antioxidant.

[Condition for Amine Infiltration Treatment]

Infiltration of the amine-containing processing liquid into the polymer (amine infiltration treatment) can be carried out, for example, by immersing the polymer in the amine-containing processing liquid.
The polymer to be subjected to the treatment may be a dried one, or may also be one swollen with a liquid such as water. When the polymer swollen with a liquid is immersed in the amine-containing processing liquid, at least a part of the liquid is replaced with the amine-containing processing liquid to give a polymer material containing the amine-processing liquid or a mixture of the liquid and the amine-containing processing liquid inside it.
The amount of the amine-containing processing liquid to be used in the amine infiltration step can be, for example, 0.1 to 10 times the mass of the polymer to be treated, or 0.2 to 5 times, or 0.3 to 3 times.
The temperature of the amine-containing processing liquid can be, for example, 5 to 100°C, or 10 to 80°C, or 15 to 60°C.
The processing time for the amine infiltration treatment may vary depending on the concentration and the temperature of the amine-containing processing liquid, and can be, for example, 0.1 to 100 hours, or 1 to 24 hours, or 2 to 12 hours.
The amine infiltration treatment can be carried out while the amine-containing processing liquid in which the polymer is immersed is shaken.

<Polymer Material>

Next, the polymer material of the present invention is described.
The polymer material of the present invention is characterized by being produced according to the production method of the present invention.
For the description relating to the production method of the present invention, reference may be made to the description in the above section of <Production Method for Polymer Material>.

The polymer material of the present invention includes, for example, an embodiment (A) containing a polymer having a polymer chain containing a structural unit derived from a monofunctional monomer and a crosslinked structure derived from a polyfunctional monomer, and an amine derived from an amine-containing processing liquid, and an embodiment (B) containing a polymer having a polymer chain containing a structural unit derived from an amino group-having monofunctional monomer and a crosslinked structure derived from a polyfunctional monomer, and not containing a component derived from an amine-containing processing liquid. The monofunctional monomer in the embodiment (A) and the polyfunctional monomer in the embodiment (B) may have an amino group or may not have an amino group. The polymer material of the present invention contains an amino group in at least one of the structural unit of the polymer and the infiltrated amine, and therefore can selectively absorb an acid gas such as carbon dioxide or hydrogen sulfide. In addition, when heated, the polymer undergoes pKa reduction or phase transition such as increase in the hydrophobic interaction of the hydrophobic group therein, and therefore desorbs the absorbed acidic gas. Specifically, the polymer material of the present invention has reversible gas absorption performance of selectively and reversibly absorbing an acidic gas. In addition, the polymer material of the present invention is one produced according to the production method of the present invention, and is therefore poorly water absorptive and poorly swellable. Consequently, when the material is formed into a commercial product as a gas-absorbing material or a gas-separating material, the volume filling ratio can be sufficiently large. In addition, when a moisture containing gas is circulated through a gas recovery unit to which the product is applied, the polymer absorbs water to swell, but can absorb only a limited amount of water and therefore the swelling degree is limited. Consequently, a gas flow path can be secured and, in addition, the quantity of heat necessary in the heating step for gas desorption can be suppressed low. In addition, even when a liquid water is added to the absorbing material, the space around the hydrated polymer can be maintained and the water flow channel can be secured, and further water can be readily discharged through the gas flow after that to introduce a gas into the resultant space. From these, the polymer material of the present invention can be effectively used as a gas-absorbing material, and the gas-absorbing material can separate an acid gas from a mixed gas, and accordingly, the polymer material can also be effectively used as a gas-separating material.

Hereinunder the average molecular weight of the polymer that the polymer material of the present invention contains, the amount of each group when the polymer has an amino group and a hydrophobic group, the physical data of the polymer, as well as the content of the amine when the polymer material contains an amine are described.

[Average Molecular Weight of Polymer, Amount of Amino Group and Hydrophobic Group]

In the case where the polymer has an amino group, the amount of the amino group can be, for example, 1 mmol/g to 23 mmol/g, or 1 mmol/g to 18 mmol/g, or 2 mmol/g to 7 mmol/g. The proportion of the amino group-having monomer in all the monomers can be, for example, 5 to 100 mol%, or 30 to 100 mol%, or 50 to 90 mol%.

In the case where the polymer has a hydrophobic group, the amount of the hydrophobic group can be, for example, 1 mol% to 50 mol%, or 5 mol% to 45 mol%, or 10 mol% to 43 mol%.

The crosslinking degree of the polymer can be, for example, 0 mol% to 50 mol%, or 5 mol% to 40 mol%, or 10 mol% to 30 mol%.

In the case where the polymer material contains an amine, the content of the amine can be, for example, 1 to 30 mmol/g per the dry weight of the polymer, or 2 to 20 mmol/g, or 3 to 10 mmol/g.

[Swelling Degree of Polymer]

The swelling degree of the polymer that the polymer material of the present invention contains can be evaluated, for example, by the water content of the polymer immersed in water for a long period of time.

[Water Content of Polymer]

When swollen with an excessive amount of water, the water content of the polymer that the polymer material of the present invention contains can be, for example, 4 g/g of polymer or less, or 3 g/g of polymer or less, or 2 g/g of polymer or less.

Here, "water content" of polymer is a value calculated as follows. An excessive amount of water is added to a polymer and left overnight at room temperature, then the resultant polymer is ground with a hand blender, filtered through filer paper or metal mesh to remove water, and the weight of the resultant polymer still in wet is represented by Mi. On the other hand, the polymer is freeze-dried or spontaneously dried and the weight of the dry polymer is represented by Mo. The water content of the polymer is calculated by the following formula.

$$\text{Water Content} = (M_1 - M_0)/M_0$$

[Reversible Gas Absorption Performance of Polymer Material]

The polymer material can have a reversible $CO_2$ absorption amount of, for example, 30 mL/g or more per the dry polymer weight, or 45 mL/g or more, or 60 mL/g or more. With that, for example, when the polymer material is applied to a gas recovery unit that recovers carbon dioxide from exhaust gas, the polymer material can efficiently absorb and recovery the carbon dioxide contained in the exhaust gas.

For the method of measuring the reversible $CO_2$ absorption amount, reference may be made to the description in the section of (Reversible $CO_2$ absorption Test) in Examples.

[Embodiment of Polymer Material]

Not specifically limited, embodiments of the polymer material of the present invention can be any of, for example, powder, slurry, film or bulk mass. For the method of forming powder, slurry or film, reference may be made to the description in the section of [Post Treatment of Polymer] in the production method for the polymer material.

<Gas-Absorbing Material>

Next, the gas-absorbing material of the present invention is described.

The gas-absorbing material of the present invention contains the polymer material of the present invention.

Containing the polymer material of the present invention, the gas-absorbing material of the present invention exhibits reversible gas absorption performance that enables absorption of an acidic gas such as carbon dioxide or hydrogen sulfide or water vapor followed by desorption of the acidic gas or water vapor by change in temperature or gas partial pressure. Regarding the description of the polymer material of the present invention, reference may be made to the description in the section of <Polymer Material> given hereinabove.

The gas-absorbing material of the present invention may contain any other component than the polymer material of the present invention (other component), in addition to the polymer material of the present invention. The other component usable in the gas-absorbing material includes, for example, water, a pKa regulator, an absorption accelerator, an desorption accelerator, a moisture absorbent, an antioxidant, a thermoplastic resin, and a filler. Regarding water, for example, water or water vapor can be intentionally added to the gas-absorbing material thereby make the material contain water. In water addition, for example, carbon dioxide gas or a bicarbonate ion can also be added to the material.

[pKa Regulator]

A pKa regulator can be added, for example, during polymerization to control the pKa of the resultant polymer to be a desired value. With that, the kind of gas to be absorbed by the polymer, the kind of gas or liquid that selectively permeates the gas-absorbing material, the permeation flux, and the selectivity for the absorption-targeted gas from other gases can be controlled. As the pKa regulator, for example, one capable of protonating or deprotonating the amino group of the polymer can be used. For example, an acid such as hydrochloric acid or a base such as sodium hydroxide can be used by appropriately controlling the concentration thereof depending on the intended pKa. In addition, also depending on the crosslinking degree of a polyfunctional monomer, pKa of amine can be controlled by controlling the local environments such as the polymer density around amines in the polymer, the distance between amines and the polarity, and therefore such a polyfunctional monomer can also be made to additionally serve as a pKa regulator. Further, by adding a hydrophobic monomer or alcohol, or a hydrophilic polymer during polymerization, pKa of amine can also be controlled by controlling the local environments such as the polymer density around amines, the distance between amines and the polarity, and therefore these can also be made to additionally serve as a pKa regulator.

[Absorption Accelerator, Desorption Accelerator]

An absorption accelerator is a compound having a function of accelerating acidic gas absorption by the polymer in the present invention. An desorption accelerator is a compound having a function of accelerating desorption of the acidic gas from the polymer. In the present invention, an absorption desorption accelerator having both functions as an absorption accelerator and an desorption accelerator can be used. These absorption accelerator, desorption accelerator and absorption and desorption accelerator can additionally have a function of a stabilizer to stabilizer the gas-absorbing material. The total content of the absorption accelerator, the desorption accelerator and the absorption and desorption accelerator in the gas-absorbing material of the present invention can be, for example, 0.05 mL or more per g of the solid content of the material, or can be 0.1 mL or more. The content of the absorption accelerator in the gas-absorbing material can be, for example, 0.1 to 12 N in terms of the amine concentration therein, or can be 1 to 10 N, or 3 to 9 N.

As the absorption accelerator, the desorption accelerator and the absorption and desorption accelerator, a low-molecular amine can be used. The molecular weight of the low-molecular amine can be, for example, 61 to 10000, or 75 to 1000, or 90 to 500. The boiling point of the low-molecular amine can be, from the viewpoint of long-term usability and practicability, for example, 80°C or higher, or 120°C or higher, or 150°C or higher. For boiling point rise, an amine-containing compound having a moiety to form a salt with a pair ion and capable of being liquid, such as an ionic liquid, can also be used.

The low-molecular amine can contain any of a primary amino group, a secondary amino group, a tertiary amino group, an ammonium group or an imidazolium group, can contain a plurality of amino groups, ammonium groups and imidazolium groups, and for example, can contain 1 to 3 such groups. The secondary amino group and the tertiary amino group may also be a cyclic amino group. Further, the low-molecular amine may contain any other functional group than an amino group, an ammonium group and an imidazolium group, and for example, can contain a hydroxy group. The number of the hydroxy groups contained in the low-molecular amine may be 0 to 2. Examples of the low-molecular amine include an amine having both an amino group and a hydroxy group, and an amine having 3 amino groups, for example, an amine having a secondary amino group and a hydroxy group. For example, an amine having a boiling point of 150°C or higher and having a secondary amine group and a hydroxy group can be selected since the amine of the type can increase the desorption amount of an acidic gas especially exponentially in a high concentration region and since it is suitable for repeated use.

Specifically, the low-molecular amine include compounds represented by the following formulae.

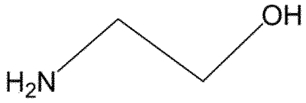

Ethanol Amine
(ETA)

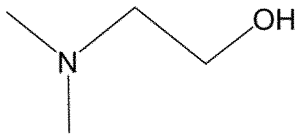

2-(Dimethylamino)ethanol
(DMAE)

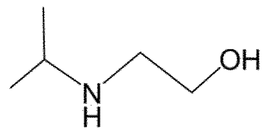

Iso propyl amino ethanol
(IPAE)

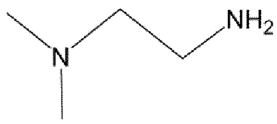

2-(Dimethylamino)ethylamine
(DMAEA)

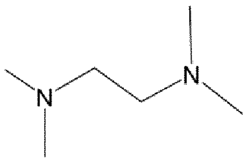

Tetramethylethylenediamine
(TMEDA)

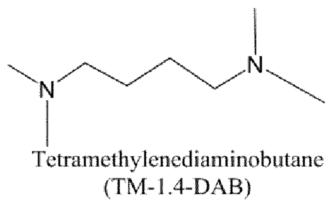

Tetramethylenediaminobutane
(TM-1.4-DAB)

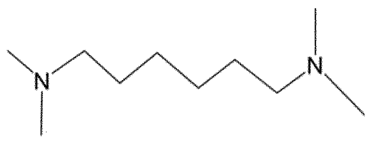

N,N,N',N'-Tetramethyl-1,6-hexanediamine
(TMHDA)

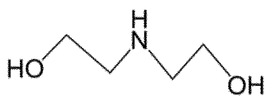

Diethanolamine
(DEOA)

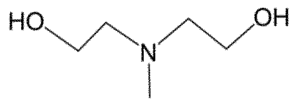

N-Methyldiethanolamine
(MDEOA)

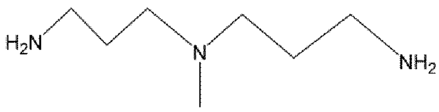

Diamino-*N*-methyl dipropyl amine
(DAMDPA)

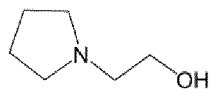

1-2 Hydroxy ethyle pyrrolidine
(1-2HE-PRLD)

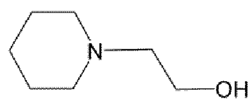

1-2 Hydroxyethylepiperidine
(1-2HE-PP)

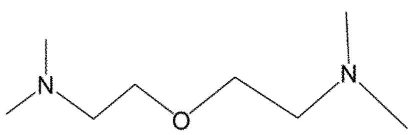

Bis(2-dimethylaminoethyl) ether
(Bis(2DMAE)ER)

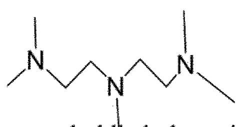

Pentamethyldiethylenetriamin
e (PMDETA)

Among these, DMAE, IPAE, Bis(2DMAE)ER, 1-2HE-PRLD, 1-2HE-PP, TM-1,4-DAB, TMHAD, and PMDETA can be selected since these can increase the desorption amount of an acidic gas; above all, IPAE, Bis(2DMAE)ER, 1-2HE-PP, TM-1,4-DAB, TMHAD, and PMDETA can be selected since these have a relatively high boiling point and therefore hardly evaporate; IPAE, TM-1,4-DAB, TMHAD, and PMDETA can be selected since the desorption amount of an acidic gas can noticeably increase by increasing the concentration thereof; and IPAE, TMHAD, and PMDETA can be selected as these are readily available.

[Moisture Absorbent]

The moisture absorbent usable as an additive is, for example, one of which a saturated aqueous solution has a relative humidity at 25°C of 90% or less. Such a moisture absorbent includes, for example, ions such as a bromide ion, a chloride ion, an acetate ion, a carbonate ion, a bicarbonate ion, a lithium ion, a potassium ion, a calcium ion, a magnesium ion, and a sodium ion. Such a moisture absorbent also includes, for example, salts such as lithium bromide, lithium chloride, calcium chloride, potassium acetate, magnesium chloride, potassium carbonate, and sodium carbonate. In the case where a moisture absorbent is added, the amount thereof to be added can be, for example, 0.01 to 10% by mass relative to the total amount of the gas-absorbing material.

[Antioxidant]

The antioxidant usable as an additive is one capable of preventing oxidation by adding it. Such an antioxidant includes, for example, vitamin C (ascorbic acid), vitamin E (tocopherol), BHT (dibutylhydroxytoluene), BHA (butylhydroxyanisole), sodium erythorbate, propyl gallate, sodium sulfite, sulfur dioxide, hydroquinone and derivatives thereof. In the case where an antioxidant is added, the amount thereof to be added can be, for example, 0.01 to 10% by mass relative to the total amount of the gas-absorbing material.

[Thermoplastic Resin]

The gas-absorbing material may contain a thermoplastic resin. With that, the thermoplastic resin and the polymer of the present invention and also other optional components may be kneaded and shaped into pellets or films.

Any known thermoplastic resin is usable here. For example, there are mentioned polyethylene, polypropylene, ethylene-vinyl acetate copolymers and other polyolefins, modified polyolefins, polyamides, thermoplastic polyimides, aromatic esters and other liquid-crystal polymers, polyphenylene oxide, polyphenylene sulfide, polycarbonates, polymethyl methacrylate, polyethers, polyether ether ketones, polyether imides, styrene-based, polyolefin-based, polyvinyl chloride-based, polyurethane-based, polyethyl lactate and other polyester-based, polyamide-based, polybutadiene-based, transpolyisoprene-based, fluororubber-based, polyvinyl chloride, polyvinyl chloride and other polyethylene chloride-based various thermoplastic elastomers, and copolymers, blends and polymer alloys mainly composed of these; and for example, polyethylene and other polyolefin-based resins can be selected. In the case where a thermoplastic resin is contained in the gas-absorbing material, the content of the thermoplastic resin can be, for example, 10 to 40% by mass relative to the total amount of the gas-absorbing material.

[Filler]

The gas-absorbing material may contain a filler. With that, some void space can be formed in the gas-absorbing material to accelerate gas diffusion into the inside area of the gas-absorbing material and to increase the reversible gas absorption speed and the reversible gas absorption amount. Further, when a filler having a gas adsorption ability is used, it can exhibit gas adsorption performance as an adsorbent in addition to gas absorption performance as an absorbent material. It is known that a gas-adsorbing material exhibits high reversible gas adsorption performance at a low humidity and a gas-absorbing material exhibits high gas absorption performance at a high humidity, and therefore, by using a gas adsorbent as a filler, a material capable of exhibiting high reversible gas adsorption performance under a broad humidity condition can be realized. As a filler having gas adsorption performance, for example, various types of active carbon and a material having a large pore area such as zeolite can be used. In particular, an adsorbent having a large carbon dioxide gas adsorption ability can be selected and used. In the case where the polymer material constituting the gas-absorbing material has absorbed water and gelled or where it is a ground product of a gelled polymer (polymer ground product), its volume reduces when a filler is added so that the filling ration increases to enhance the reversible gas absorption performance thereof. As the filler, preferably used are fine particles having a primary particle diameter of 1000 nm or less, as mentioned below. Further, when a gas-absorbing material containing a polymer ground product and a filler is ground, the reversible gas absorption performance thereof can be improved more. For grinding the gas-absorbing material containing a polymer ground product and a filler, a planetary ball mill device using a bead mill can

be used.

For accelerating gas diffusion into the depth of the absorbing material, a powdery filler can be selected. Also those having an average primary particle diameter of, for example, 1000 nm or less can be employed. The primary particle diameter referred to herein can be measured through observation with a transmission electron microscope. Fine particles having a primary particle diameter of 1000 nm or less for use in the present invention can be composed of fine particles having a primary particle diameter of 1000 nm or less alone. The particle diameter can be, as an average primary particle diameter, 0.1 nm to 1000 nm, or 0.3 nm to 500 nm, or 0.5 nm to 300 nm, or 1 nm to 200 nm, or 1.5 nm to 100 nm, or 2 nm to 50 nm, or 2.5 nm to 25 nm. With that, a gas diffusion phase can be more surely formed in a shaped product of the gas-absorbing material to be able to more increase the diffusion speed. The fine particles may be aggregates of primary particles. Preferably, the aggregate has a size of 100 nm to 200 μm, more preferably 500 nm to 100 μm, most preferably 2.5 μm to 50 μm. As the filler, one having a water contact angle of, for example, 70° or more can be used. The water contact angle can be 80° or more, or 100° or more, or 110° or more, or 120° or more, or 130° or more, or 140° or more.

Fine Particles having primary particle diameter of 1000 nm or less

In the following, the fine particles having a primary particle diameter of 1000 nm or less usable as a filler are described specifically.

The fine particles having a primary particle diameter of 1000 nm or less can be composed of an inorganic material or can be composed of an organic material, or can also be composed of a combination of an organic material and an inorganic material. Also, the fine particles can be water-repellent fine particles or hydrophilic fine particles, but are preferably water-repellent fine particles. When water-repellent fine particles are used, the void space formed by the fine particles can be prevented from being clogged by the water absorbed by the gas-absorbing material and the void space can effectively function as a gas diffusion phase.

Here, "water-repellent fine particles" means fine particles having a primary particle diameter of 1000 nm or less and having a water contact angle of 70° or more. "Water contact angle" of fine particles means a contact angle with water measured on the surface of the fine particle deposit film formed of the fine particles. The water contact angle on the surface of the fine particle deposit film can be measured by hydrostatic contact angle measurement with water.

The water contact angle of the water-repellent fine particles is preferably 80° or more, more preferably 100° or more, even more preferably 110° or more, further more preferably 120° or more, further more preferably 130° or more, and most preferably 140° or more.

(Water-Repellent Fine Particles)

The water-repellent fine particles having a primary particle diameter of 1000 nm or less can be fine particles having water repellency by themselves, or may be those prepared by imparting water repellency to the surfaces of the particles to be a substrate (substrate particles). Fine particles prepared by imparting water repellency to the surfaces of substrate particles include coating film-having fine particles prepared by forming a water-repellent coating film on the surface of a substrate, and surface-modified fine particles prepared by surface modification of substrate particles for imparting water repellency thereto.

The fine particles having water repellency by themselves include carbon black. Examples of the carbon black include acetylene black, furnace black, channel black, thermal black, lamp black, and Ketjen black, and above all, acetylene black is preferred.

As other water-repellent fine particles, there are mentioned fine particles of CNovel (porous carbon, by Toyo Tanso Co., Ltd.), titanium oxide, and mesoporous silica.

Also as fine particles having water repellency by themselves, there are mentioned fine particles formed of a water-repellent organic material. The water-repellent organic material for use for forming particles includes a fluororesin containing a structural unit represented by $-(CA^1A^2-CA^3A^4)-$ (wherein $A^1$ to $A^4$ each represents a hydrogen atom, a fluorine atom, a chlorine atom or a perfluoroalkyl group, and at least one of $A^1$ to $A^4$ is a fluorine atom). Specific examples of the fluororesin include polytetrafluoroethylene (PTFE), a copolymer of tetrafluoroethylene and any other monomer, polychlorotrifluoroethylene (PCTFE), a copolymer of chlorotrifluoroethylene and any other monomer, polyvinylidene fluoride (PVDV), polyvinyl fluoride (PVF), and polytetrafluoropropylene (HEP). The copolymer of tetrafluoroethylene and any other monomer includes a perfluoroalkoxyalkane (PFA: tetrafluoroethylene and perfluoroalkyl vinyl ether copolymer), perfluoroethylene-propene copolymer (FEP: tetrafluoroethylene and hexafluoropropylene copolymer), an ethylene-tetrafluoroethylene copolymer (ETFE), and a tetrafluoroethylene-perfluorodioxol copolymer (TFE/PDD). The copolymer of chlorotrifluoroethylene and any other monomer includes an ethylene-chlorotrifluoroethylene copolymer (ECTFE).

One alone or two or more kinds of these water-repellent organic materials can be used either singly or as combined.

The substrate particles for the coating film-having fine particles and the surface-modified fine particles may be inorganic particles or organic particles, but are preferably inorganic particles. When fine particles having water repellency by themselves are used as the substrate particles and when the fine particles are processed to have a water-repellent coating film thereon, or are surface-modified for imparting water repellency thereto, the gas absorption and desorption amount thereof can be enhanced along with the gas absorption speed and desorption speed thereof.

As the inorganic particles, known ones can be used, including particles of an inorganic compound, such as carbon black, e.g., acetylene black, furnace black, channel black, thermal black, lamp black and Ketjen black, and an oxide, a hydroxide, a nitride, a halide, a carbonate, a sulfate, an acetate or a phosphate of a metal element or a semi-metal element, and natural mineral particles. The inorganic compound with a metal element or a semi-metal element includes lithium fluoride, calcium carbonate, calcium phosphate, calcium sulfate, calcium fluoride, barium sulfate, titanium dioxide (titania), zirconium dioxide (zirconia), aluminum oxide (alumina), alumina silicates (alumina silicate, kaolin, kaolinite), and silicon dioxide (silica, silica gel); and the natural mineral includes talc and clay. Among these, preferred are particles of carbon black or silicon oxide.

As the organic particles, known ones can be used, including particles of styrene-based, acrylic, melamine-based, benzoguanamine-based or silicone-based polymers. At that time, a filler can be used concurrently. For example, active carbon or zeolite is preferably used as a filler.

As the water-repellent coating film to coat the substrate particles, usable is a coating film of an organopolysiloxane or an organohydrogen polysiloxane, in addition to the water-repellent organic material exemplified hereinabove as the water-repellent material for use for forming fine particles. The organosiloxane includes a dialkylpolysiloxane, and an alkylphenylpolysiloxane, and the organohydrogen polysiloxane includes an alkylhydrogen polysiloxane. The alkyl group in the dialkylpolysiloxane, the alkylphenylpolysiloxane and the alkylhydrogen polysiloxane may be linear, branched or cyclic, but is preferably linear. The carbon number of the alkyl group is preferably 1 to 20, more preferably 1 to 10, even more preferably 1 to 6. Here, the two alkyl groups bonding to the silicon atom may be the same as or different from each other. Specific examples of the organopolysiloxane include dimethylpolysiloxane and methylphenylpolysiloxane; and specific examples of the organohydrogen polysiloxane include methylhydrogen polysiloxane.

The surface modification method to be applied to the substrate particles includes a method of introducing a water-repellent group such as an alkyl group or a fluoroalkyl group into the surfaces of the substrate particles. The alkyl group and the fluoroalkyl group to be introduced into the substrate may be linear, branched or cyclic, but is preferably linear. The carbon number of the alkyl group and the fluoroalkyl group is preferably 1 to 20, more preferably 1 to 15, even more preferably 1 to 10. The fluoroalkyl group may be a partial fluoroalkyl group where a part of the hydrogen atoms of the alkyl group are substituted with fluorine atoms, or may be a perfluoroalkyl group where all of the hydrogen atoms of the alkyl group are substituted with fluorine atoms.

Surface modification for introducing such a water-repellent group into the substrate particles can be attained by using a silane compound such as a silane coupling agent or a silazane. The silane coupling agent includes compounds represented by the following general formula (1).

$$R^1{}_nSiX_{(4-n)} \qquad (1)$$

In the general formula (1), X represents a hydrolyzable group capable of forming a silanol group by hydrolysis, $R^1$ represents a group containing a water-repellent group, and n represents an integer of 1 to 3.

In the silane coupling agent represented by the general formula (1), the silanol group or the silyl group formed by hydrolysis of X reacts with the functional group on the surfaces of the substrate particles to introduce a water-repellent group into the substrate particles.

In the general formula (1), "hydrolyzable group capable of forming a silanol group" represented by X includes an alkoxy group such as a methoxy group and an ethoxy group, and a halogen group.

The water-repellent group in $R^1$ includes an alkyl group, a fluoroalkyl group, and a dimethylsiloxane. Regarding the description and the preferred range of the alkyl group and the fluoroalkyl group, reference may be made to the description and the preferred range of the water-repellent group that can be introduced into the surfaces of the substrate particles. The water-repellent group can directly bond to Si, or can bond thereto via a linking group.

n is an integer of 1 to 3, preferably 1 or 2. When n is 2 or more, plural $R^1$'s may be the same as or different from each other. When n is 2 or less, plural X's may be the same as or different from each other.

Examples of the silane coupling agent represented by the general formula (1) include triethoxyalkylsilane, diethoxydialkylsilane, ethoxytrialkylsilane, trimethoxyalkylsilane, dimethoxydialkylsilane, methoxytrialkylsilane, and trichloroalkylsilane. Also examples of the silane coupling agent include trimethoxycaprylylsilane (trimethoxy-n-octylsilane), and octadecyltrichlorosilane.

Formation of a water-repellent coating film on the substrate particles and surface modification treatment thereon mentioned above can be carried out according to an ordinary method.

Commercial products of water-repellent fine particles include Microdispers-200 (by Techno Chemical Corporation), AEROSIL RY200, AEROSIL RY300, and AEROSIL R805 (all by Evonik Corporation), and Ketjen Black (by Lion Specialty Chemicals Corporation).

One alone or two or more kinds of the above-mentioned water-repellent fine particles can be used either singly or as combined.

(Other Fine Particles than water-repellent fine particles)

Fine particles having a primary particle diameter of 1000 nm or less that are usable as a filler are not limited to water-repellent fine particles but may be any other fine particles than water-repellent fine particles, that is, fine particles having a water contact angle of less than 70° are also usable as a filler. Water-repellent fine particles can be combined with fine particles having a water contact angle of less than 70° for use herein. Fine particles having a water contact angle of less than 70° may be those having a water contact angle of 50° or less, or 30° or less, or 10° or less. The lower limit of the water contact angle of fine particles is 0°.

As other fine particles than water-repellent fine particles, there are also mentioned particles formed of an inorganic compound of a metal element or a semimetal element described as examples of the substrate particles for the coating film-having fine particles and surface-treated fine particles in the section of (Water-Repellent Fine Particles) given hereinabove, and also organic particles, and particles of silicon oxide are preferably used. These inorganic particles and organic particles may have a coating film of an organic compound on the surfaces thereof, or may have an organic functional group introduced thereinto.

Commercial products of the other fine particles than water-repellent fine particles include AEROSIL 200 (by Evonik Corporation).

(Specific Surface Area of Fine Particles)

The specific surface area of the fine particles is preferably 1 to 300 $m^2/g$, more preferably 2.5 to 2750 $m^2/g$, even more preferably 5 to 2500 $m^2/g$. With that, the gas diffusion phase is more reliably formed in a molded body of the gas absorbing material, and the gas absorption rate and the gas diffusion rate tend to be further improved.

The specific surface area of the fine particles can be measured according to a BET method.

Quantity ratio of polymer material to fine particles having a primary particle diameter of 1000 nm or less

The blending ratio as a solid content by weight of the polymer material to the fine particles (polymer material/fine particles) is preferably 95/5 to 5/95, more preferably 90/10 to 30/70, even more preferably 80/20 to 50/50. The content of the polymer material in the gas-absorbing material is, as the solid content, preferably larger than the content of the water-repellent fine particles therein. In the case where the polymer material has absorbed water and gelled or where it is a ground product of a gelled polymer, its volume reduces when a filler is added to the gas-absorbing material so that the filling ration increases to enhance the reversible gas absorption performance thereof. From the viewpoint of effectively attaining the effect, the ratio by volume of the gelled polymer or the ground product thereof to the fine particles (gelled polymer or ground product thereof/fine particles) is preferably 99.9/0.1 to 98/2, more preferably 99.75/0.25 to 98.5/1.5, even more preferably 99.5/0.5 to 99/1.

When the quantity ratio of the polymer material to the fine particles is defined to fall within the above range, the gas absorption rate and the gas desorption rate can tend to increase.

However, the gas-absorbing material of the present invention is not limited to one containing fine particles having a primary particle diameter of 1000 nm or less. Namely, the gas-absorbing material of the present invention may not contain fine particles having a primary particle diameter of 1000 nm or less.

Other Filler

The gas-absorbing material of the present invention may use any other known filler than the above-exemplified fine particles. Examples thereof include active carbon, zeolite; oxides such as silica, fumed silica, hydrophobized silica, hydrophobized fumed silica, water-repellent silica, alumina, hydrophobized alumina, water-repellent alumina, boehmite, diatomaceous earth, titanium oxide, iron oxide, zinc oxide, magnesium oxide, and metal ferrite; hydroxides such as aluminum hydroxide and magnesium hydroxide; carbonates such as calcium carbonate (light, heavy), magnesium carbonate, dolomite, and dawsonite; sulfates or sulfites such as calcium sulfate, barium sulfate, ammonium sulfate, and calcium sulfite; silicates such as talc, mica, clay, glass fibers, calcium silicate, montmorillonite, and bentonite; borates such as zinc borate, barium metaborate, aluminum borate, calcium borate, and sodium borate; carbons such as carbon black, hydrophobized carbon black, water-repellent carbon black, graphite, and carbon fibers; other iron powder, copper powder, aluminum powder, zinc flower, molybdenum sulfide, boron fibers, potassium titanate, lead titanate zirconate,

fluororesin powder, and Teflon (registered trademark) powder, and a hydrophobic substance for preventing water vapor from condensing or dewing can also be selected for use herein. In addition, carbon such as carbon black can also be selected and used. These fillers may have a primary particle diameter of 1000 nm or less, or more than 1000 nm. The gas-absorbing material of the present invention may also contain particles of a material that is the same as that exemplified for fine particles having a primary particle diameter of 1000 nm or less, but having a primary particle diameter of more than 1000 nm. In the case where the gas-absorbing material contains a filler, the filler content therein can be, for example, 0.1 to 60% by mass relative to the total amount of the gas-absorbing material.

[Dispersion Medium]

The gas-absorbing material may contain a dispersion medium for suspending the polymer material of the present invention and additives. Regarding the preferred range and specific examples of the dispersion medium, reference may be made to the description in the section of [Solvent] in the production method for the polymer material.

One alone or two or more kinds of the other components usable in the gas-absorbing material described above can be used either singly or as combined.

<Mode of Use of Gas-Absorbing Material>

The gas-absorbing material containing the polymer material of the present invention can be used in various modes. Regarding the use mode of the gas-absorbing material, for example, the gas-absorbing material is filled in a container such as a drum can, the gas-absorbing material is molded in a sheet shape to form a laminate or a roll with a nonwoven fabric or a mesh, the gas-absorbing material is filled inside a filter, the gas-absorbing material is kneaded with a hard material such as polyethylene and molded into a self-standing film, fibers or pellets, the gas-absorbing material is supported by a carrier, and or a powder of the gas-absorbing material is filled inside a honeycomb structure. In the case where the gas-absorbing material is formed into a sheet or a film, the thickness thereof is not specifically limited and can be, for example, 1 to 10000 μm, or 10 to 5000 μm, or 100 to 1000 μm.

Here, in the case where the gas-absorbing material is supported by a carrier, a thin plate or a fiber aggregate can be used as the carrier. In the following, a thin plate and a fiber aggregate usable as a carrier are described.

[Thin Plate]

As a thin plate, usable is a tabular plate, sheet or foil having a thickness of, for example, 2 mm or less and 5 μm or more.

The thin plate may be formed of a material having an isobaric specific heat of 2500 KJ/($m^3$K) or less, or having a thermal conductivity of 10 W/(mK) or more. The thin plate having such thermal characteristics can change the temperature thereof well responsive to the external temperature change and can efficiently transmit the temperature change to the entire gas-absorbing material.

Here, in this description, "isobaric specific heat" is a value measured with a calorimeter such as a water calorimeter or a differential scanning calorimeter. "Thermal conductivity" is a value measured according to a laser flash method or a steady heat flow method.

As the thin plate, usable is a metal thin plate (metal foil), a carbon material sheet, a carbon sheet or a resin film (polymer compound film). Examples of the carbon material sheet include a graphite sheet, and for a resin film, there are exemplified polyethylene, polypropylene, PET, and polyimide. As the thin plate, for example, an aluminum thin plate, an iron thin plate or a graphite sheet can be used having a higher thermal conductivity. Also, as having a low specific heat, for example, an aluminum thin plate, a graphite sheet or a resin film can also be used. In addition, further examples of the metal thin plate include a stainless steel thin plate, an iron thin plate, an aluminum thin plate and a nickel thin plate. Among these, an iron thin plate, an aluminum thin plate and a nickel thin plate can be especially selected as having a relatively high thermal conductivity.

The thin plate may be a tabular article having a homogeneous internal structure, or may also be a porous or honeycomb structure. In the case of a porous or honeycomb structure, the gas-absorbing material can be filled into the pores thereof and therefore the heat of the thin plate can be readily transferred to the gas-absorbing material to enhance the responsiveness of the gas-absorbing material to temperature change. In particular, a porous structure of a foam metal, foam nickel or porous carbon has a high conductivity to the gas-absorbing material, and by using this as a carrier, the responsiveness of the gas-absorbing material to temperature change can be greatly enhanced. The pore size of the porous material of a foam metal can be, for example, 0.1 to 10 mm, or 0.4 to 4 mm. The specific surface area thereof can be, for example, 100 to 10000 $m^2/m^3$, or 200 to 6000 $m^2/m^3$. A porous carrier formed of a porous resin or porous carbon has a small heat capacity, and therefore by using it, the thermal efficiency of the absorbent can be enhanced. As a porous material for the carrier, one having a porosity of, for example, 1 to 99%, or 10 to 99%, or 20 to 95% can be

selected.

In this description, "porosity of thin plate" means a porosity determined by the apparent volume and mass of the thin plate and the density of the material.

The carrier can also be a laminate formed by laminating a plurality of these thin plates. In the laminate, the constituent thin plates may be all the same, or a plurality of thin plates differing in the material and the thickness can be combined.

[Fiber Aggregate]

The fiber aggregate is one produced by processing a large number of fibers into a thin and broad tabular structure. The fiber aggregate includes fabric and paper. Above all, a porous material such as a filter is preferably used. The fabric may be any of a woven fabric, a felt or a nonwoven fabric. Also one produced by sintering a metal fiber felt can be used as the carrier. This is so configured that sintered fibers are densely aggregated to give a high thermal conductivity. For example, usable here is one produced by sintering a felt of stainless steel fibers, or one produced by sintering a felt of nickel fibers. Above all, one produced by sintering a felt of nickel fibers can be selectively used.

The fibers to be used in the fiber aggregate can be those having an isobaric specific heat of, for example, 2500 KJ/($m^3$K) or less, or those having a thermal conductivity of 10 W/(mK) or more. The fiber aggregate having such thermal characteristics can attain temperature change at high responsiveness in accordance with the external temperature change, and can efficiently transmit the temperature change to the entire gel-like film thereof.

The fibers to be used in the fiber aggregate may be inorganic fibers or may also be organic fibers, or composite fibers of inorganic fibers and organic fibers as combined. The inorganic fibers include metal fibers such as stainless steel fibers, aluminum fibers and nickel fibers, and carbon fibers, and nickel fibers can be selected as attaining high thermal conductivity. As the organic fibers, usable are any of natural fibers of cotton or hemp, and synthetic fibers of rayon or polyester.

Not specifically limited, the diameter of the fibers can be, for example, 8 to 100 μm. With that, a film of the gas-absorbing material excellent in gas absorption performance and desorption performance can be produced.

The carrier may also be a laminate produced by laminating a plurality of these fiber aggregates. In the laminate, the constituent fiber aggregates may be all the same, or a plurality of fiber aggregates differing in the kind of fiber, the fiber diameter and the fiber density can be combined. Also the carrier can be a laminate produced by laminating a thin plate and a fiber aggregate.

Not specifically limited, the shape of the carrier can be appropriately selected depending on the intended use thereof. Specific examples of the shape of the carrier include a tabular shape and a cylindrical shape, and the plane form of the tabular shape and the cross-section form of the cylindrical shape can be any of a polygonal shape such as a square shape or a rectangular shape, or a perfect circle or an elliptical shape.

The gas-absorbing material supported by a carrier can be formed by a method of applying a slurry or a powder of the gas-absorbing material to the surface of a carrier, or a method of sticking a previously-prepared film of the gas-absorbing material to the surface of a carrier. A binder can be used for stably fixing a slurry or powder of the gas-absorbing material to the carrier.

<Gas Recovery Unit>

The gas-absorbing material of the present invention can reversibly absorb an acidic gas such as carbon dioxide and water vapor, as described above, and in addition, since the swellability of the polymer component therein is low, the volume filling ratio of the material can be increased when the gas-absorbing material is formed into commercial products of gas absorbent. Consequently, the gas-absorbing material can be favorably used as a material of gas absorbent, for example, in a gas recovery unit of selectively recovering carbon dioxide from exhaust gas. In the following, a first embodiment and a second embodiment of a gas recovery unit to which the gas-absorbing material of the present invention is applied are described. Fig. 1 is a schematic view showing a first embodiment of a gas recovery unit, and Fig. 2 is a schematic view showing a second embodiment of a gas recovery unit.

As shown in Fig. 1, the gas recovery unit of the first embodiment has a heat exchanger 21, a desulfurizer 22, a columnar gas absorbent 23, and first to third pipes 24, 25 and 26 connected to these parts. One end of the first pipe 24 is a gas inlet port to introduce exhaust gas (gas to be treated) thereinto, and the other end is connected to the desulfurizer 22. One end of the second pipe 25 is connected to the desulfurizer 22, and the other end thereof is connected to one side surface of the gas absorbent 23. The third pipe 26 has a circulation route 26a connected to, for example, one side surface and the other side surface of the gas absorbent 23, and a branch route 26b branching from the circulation route 26a on the side of one side surface of the gas absorbent 23, and one end of the branch route 26b is a gas discharge port of discharging the collected carbon dioxide gas. The connections of the second pipe 25 and the third pipe 2 on one side surface of the gas absorbent 23 each are, for example, so arranged that they sandwich the center portion of the

absorbent nearly on the same diameter of the side surface thereof. The heat exchanger 21 is connected to the midway of the first pipe 24 and the midway of the circulation route 26a.

The gas absorbent 23 is composed of the gas-absorbing material of the present invention, and when the operation of the gas recovery unit is OFF, its temperature is controlled to be nearly the same as the ambient temperature.

The gas absorbent 23 can be in a filter form and can be so arranged that the gas flow path in the gas recovery unit can pass through at least a part of the filter absorbent.

The gas absorbent 23 may not be in a filter form, and can be so arranged to be positioned in a site out of at least a portion of the gas flow path in the gas recovery unit.

In recovering carbon dioxide from exhaust gas by using the gas recovery unit, the operation of each part is turned ON, and a high-temperature exhaust gas processed for dust extraction is introduced from one end of the first pipe 24. The introduced exhaust gas passes through the first pipe 24, and is then introduced into the desulfurizer 22 having cooling performance down to around 30°C. Here, the desulfurizer and the cooler may be different devices. The temperature of the gas having passed through the desulfurizer 22 having cooling performance need not be 30°C, and can be 40°C or 50°C or so. In passing through the first pipe 24, a part of the heat of the exhaust gas is transmitted to the circulation route 26a of the third pipe 26 via the heat exchanger 21 so that the gas temperature or the dew-point temperature of the gas inside the circulation route 26a is controlled to be up to about 60°C. Heating the gas in the circulation route 26a may be with hot water. The gas temperature or the dew-point temperature of the gas inside the circulation route 26a may be 60°C or higher, or may also be 75°C or 85°C or so. The gas inside the circulation route 26a may be depressurized. In the case where the gas inside the circulation route 26a is depressurized and where the gas in the circulation route 26a is heated with hot water, the gas in the circulation route 26 may not run, or the gas flow rate through the rouge may be extremely small. The exhaust gas introduced into the desulfurizer 22 is desulfurized in the desulfurizer 22, and then runs into the second pipe 25. The temperature or the dew-point temperature of the exhaust gas having run into the second pipe 25 is around 30°C, and at around the temperature, the exhaust gas is introduced into the gas absorbent 23. In the gas absorbent 23, since the temperature of the exhaust gas is around 30°C, the absorbent is cooled in the region in which the exhaust gas is kept into contact with the absorbent, and an acidic gas such as carbon dioxide is efficiently absorbed by the gas absorbent while the other gas than carbon dioxide is discharged out of the gas absorbent 23. In the case where the dew-point temperature of the exhaust gas is lower than the temperature of the absorbing material, the absorbing material and the exhaust gas can be effectively cooled by evaporation of water and the temperature thereof can be thereby appropriately controlled. In the case where the absorbent is cooled insufficiently by the cooled exhaust gas, additional cooling can be carried out by introduction of a cooling gas, or by using evaporation latent heat of water by depressurization or introduction of a dry gas. On the other hand, the region of the gas absorbent 23 having absorbed carbon dioxide moves near the connection of the third pipe 26 by the rotation of the gas absorbent 23, and comes to be in contact with the gas introduced via the circulation route 26a of the third pipe 26. The gas introduced via the circulation route 26a is heated at around 75°C through heat exchange with the exhaust gas, and therefore the gas absorbent 23 in the region in which the gas has been in contact therewith, the gas-absorbing material is heated and the acidic gas such as carbon dioxide is desorbed. At that time, in the case where the dew-point temperature of the gas inside the circulation route 26a is higher than the temperature of the absorbing material, the absorbing material can be effectively and favorably heated by the condensation heat of water vapor. Also in the case where the gas in the circulation route 26a is depressurized, carbon dioxide can be effectively desorbed by reduction in the carbon dioxide partial pressure. A part of the desorbed carbon dioxide runs into the branch route 26b of the third pipe 26, and is discharged outside through the gas discharge port of the branch route 26b, and recovered. A part of the desorbed carbon dioxide runs into the circulation route 26a of the third pipe 26. The carbon dioxide having run into the circulation route 26a is heated or humidified by the heat exchanger 21 in the midway of the circulation route 26a, and then again introduced into the gas absorbent 23, and the heat thereof is utilized for heating the gas-absorbing material.

As described above, in the carbon dioxide gas recovery unit of the first embodiment, the heat of exhaust gas is reused to heat the gas absorbent, which is thus switched from an acid gas-absorbing state to a gas-desorbing state. In this embodiment, the heat of exhaust gas is effectively used and therefore the energy consumption amount in the carbon dioxide gas separation and recovery process can be greatly reduced. In the case where the temperature of the exhaust gas and the gas absorbent in the first embodiment cannot be controlled to a temperature suitable for absorption and desorption of carbon dioxide, an external heat exchange mechanism or an additional heating mechanism can be added to the piping and the absorbent to improve the temperature control.

Next, the gas recovery unit of the second embodiment is described.

As shown in Fig. 2, the gas recovery unit of the second embodiment has a first heat exchanger 31 and a second heat exchanger 32, a desulfurizer 33, a first tank 34 and a second tank 35, and a first pipe 36 and a second pipe 37 connected to these parts. One end of the first pipe 36 is a gas inlet port to introduce exhaust gas (gas to be treated) thereinto, and the other end is connected to the desulfurizer 33 having cooling performance. Here, the desulfurizer and the cooler may be different devices. The second pipe 37 has a main route 37a connected to the desulfurizer 33 at one end thereof, and a first route 37b and a second route 37c branching at the other end of the main route 37a. The first

route 37a communicates with the main route 37a at one end thereof, and the other end thereof is connected to the first tank 34. The second route 37c communicates with the main route 37a at one end thereof, and the other end thereof is connected to the second tank 35. At around the other ends of the first route 37b and the second route 37c, valves (not shown) of opening and closing the routes 37b and 37c are arranged. The first heat exchanger 31 is connected to the first midway of the first pipe 36 and the first tank 34, and the second heat exchanger 32 is connected to the second intermediate portion of the first pipe 36 and the second tank 35.

With that, in the gas recovery unit of the second embodiment, gas-absorbent materials (gas absorbents) 38 and 39 are individually formed on the heat exchange surface of the first heat exchanger 31 in the first tank 34 and on the heat exchange surface of the second heat exchanger 32 in the second tank 35, respectively; and when the operation of the gas recovery unit is OFF, the gas absorbents 38 and 39 come to be nearly at the same temperature (30°C or so) as the ambient temperature.

In recovering carbon dioxide gas from exhaust gas by using the carbon dioxide gas recovery unit, first, the valve of the first route 37b of the second pipe 37 is opened, the valve of the second route 37c of the second pipe is closed, the first heat exchanger 31 is turned OFF, and the second heat exchanger 32 is turned ON. In that state, the first tank 34 functions as an absorption tower. Namely, in that state, when a high-temperature exhaust gas processed for dust extraction is introduced from one end of the first pipe 36, the introduced exhaust gas passes through the first pipe 36 and is introduced into the desulfurizer 33. In passing through the first pipe 36, a part of the heat of the exhaust gas is transferred to the second tank 35 via the second heat exchanger 32, and the exhaust gas is thus cooled. The exhaust gas introduced into the desulfurizer 33 is desulfurized by the desulfurizer 33 having cooling performance, and thus after further cooled, it runs into the main route 37a of the second pipe 37. The temperature or the dew-point temperature of the exhaust gas having run into the main route 37a is around 30°C, at around that temperature, the exhaust gas is introduced into the first tank 34 via the main route 37a and the first route 37b. In the first tank 34, since the temperature or the dew-point temperature of the exhaust gas is around 30°C, the gas absorbent 38 is efficiently cooled and, as a result, carbon dioxide is efficiently absorbed while the other gas than carbon dioxide is discharged outside through the gas discharge port arranged in the first tank 34. The temperature or the dew-point temperature of the exhaust gas to run into the main route 37a to cool the absorbent need not be 30°C, and may be 40°C or 50°C or so.

After the gas absorbent 38 has sufficiently absorbed carbon dioxide, the valve of the first route 37b of the second pipe 37 is closed, the valve of the second route 37c of the second pipe 37 is opened, the first heat exchanger 31 is turned ON and the second heat exchanger 32 is turned OFF. Thus, the heat of the exhaust gas passing through the first pipe 36 is transferred to the first tank 34 and the gas absorbent 38 via the first heat exchanger 31. In the first heat exchanger 31, also preferably, water is used as a heat medium and the gas absorbent 38 is heated by introduction of heated water or water vapor. The gas absorbent 38 in the first tank 34 is heated up to around 75°C by the heat from the first heat exchanger 31 to desorb carbon dioxide. The temperature of the heated gas absorbent 38 may be 60°C or 85°C or so. During heating, the gas absorbent 38 may be depressurized. The desorbed carbon dioxide is discharged from the gas discharge port arranged in the first tank 34, and is recovered. On the other hand, in the second tank 35, exhaust gas at around 30°C that has run into the second pipe 37 via the same route as above is introduced via the second route 37c, and carbon dioxide is absorbed by the gas absorbent 39 loaded in the tank 35. In the case where the dew-point temperature of the exhaust gas is lower than the temperature of the absorbing material, the absorbing material and the exhaust gas are effectively and favorably cooled by evaporation of water from the absorbing material. In the case where the absorbent is cooled insufficiently by the cooled exhaust gas, it is desirable that additional cooling is carried out by introduction of a cooling gas, or by using evaporation latent heat of water by depressurization or introduction of a dry gas. Namely, in that state, the first tank 34 functions as an desorption tower and the second tank 35 functions as an absorption tower to concurrently attain both absorption and desorption of carbon dioxide gas.

After desorption of carbon dioxide from the gas absorbent 38 an absorption of carbon dioxide by the gas absorbent 39 are carried out sufficiently, as shown in Fig. 2, the valve of the first route 37b of the second pipe is opened, the valve of the second route 37c of the second pipe 37 is closed, the first heat exchanger 31 is turned OFF and the second heat exchanger 32 is turned ON, whereby the first tank 34 and the second tank 35 are switched to function as an absorption tower and an desorption tower, respectively. Thus, absorption and desorption of carbon dioxide gas can be carried out concurrently by the towers opposite to those before switching. Further, by repeating the switching operation as above, absorption and desorption of carbon dioxide gas in a large amount of exhaust gas can be efficiently separated and recovered. The number of the towers filled with the gas absorbent may be 2 or more.

As described above, also in the gas recovery unit of the second embodiment, the gas absorbent is heated by reutilizing the heat of exhaust gas and is switched from a state of absorbing an acidic gas to a state of desorbing the gas. Accordingly, as compared with a conventional carbon dioxide gas separation and recovery process, the energy utilization efficiency can be greatly increased by the gas recovery unit of the second embodiment. In the second embodiment where the temperature of the exhaust gas and the absorbent could not be controlled to a temperature suitable for absorption and desorption of carbon dioxide, an external heat exchange mechanism or an additional heating mechanism is added to the piping and the absorbent to improve the temperature control.

The gas recovery unit can be used for the purpose of gas supply. In use for gas supply, the unit is provided as a gas supply unit.

Examples

The characteristics of the invention are described specifically with reference to the following Examples and Comparative Examples, in which the material used, its amount and ratio, the details of the treatment and the treatment process may be suitably modified or changed not overstepping the spirit and the scope of the invention. Accordingly, the invention should not be limitatively interpreted by the specific examples mentioned below. In the following description, the parenthesized concentration indicates a concentration of the targeted component in the reaction mixture.

In Examples, the reversible gas absorption test was carried out as follows.

(Reversible $CO_2$ Absorption Test)

A polymer sample was put into a reactor, water was added thereto, and the reactor was sealed up and put into a thermostatic bath at 30°C. 10% $CO_2$ gas ($CO_2/N_2$ = 10/90) humidified at 60°C was introduced into the reactor at a flow rate of 10 mL/min for 46 minutes to make the polymer sample absorb $CO_2$. Subsequently, the temperature inside the thermostatic bath was elevated up to 75°C and kept as such for 25 hours to desorb the $CO_2$ gas. At that time, the amount of the $CO_2$ gas discharged out of the reactor was measured to be a reversible $CO_2$ absorption amount of the polymer. In the following Examples 1 to 6 and Comparative Examples 1 to 8, 20 g of a polymer material was put into a reactor having a volume of 90 mL, and 40 mL of water was added for the measurement.

[1] Investigation of Total Monomer Concentration in Reaction Mixture

(Comparative Example 1) Production of polymer for which the total monomer concentration was 1.1 mol/L

N-(dimethylaminopropyl)methacrylamide (DMAPM: 5842.98 mg, (6215.94 mL), 55 mol%), N,N'-methylenebisacrylamide (BIS: 962.02 mg, 10 mol%) and cetyltrimethylammonium bromide (CTAB: 36.445 mg, 2 mM) were dissolve in MilliQ water to prepare a mixture having a total amount of 50 mL. The mixture was heated up to 70° with stirring with a mechanical stirrer, then a solution prepared by dissolving N-tert-butylacrylamide (TABm: 2779.80 mg, 35 mol%) in methanol (5 mL) was added thereto and bubbled with nitrogen for 30 minutes. An acetone solution(250 $\mu$L) containing 2,2'-azobis(2-methylpropionitrile) (AIBN: 21.18 mg, 2.58 mM) was added to the mixture to give a reaction mixture, which was then polymerized in a nitrogen atmosphere at 70°C for 3 hours to give a polymer precipitate. The reaction liquid was filtered, and the collected polymer was freeze-dried to give a comparative sample 1.

(Comparative Example 2) Production of polymer for which the total monomer concentration was 0.57 mol/L

A freeze-dried polymer (comparative sample 2) was produced in the same manner as in Comparative Example 1 except that the amount of DMAPM, TBAm and BIS was changed as in Table 1.

(Example 1) Production of polymer for which the total monomer concentration was 1.7 mol/L

A polymer precipitate was produced in the same manner as in Comparative Example 1 except that the amount of DMAPM, TBAm and BIS was changed as in Table 1 and TABm was dissolved in 8 mL of methanol and added to the mixture. 100 mL of MilliQ water was added to the polymer precipitate, and ground with a hand blender to prepare a slurry. The slurry was filtered, and the collected polymer was freeze-dried to give a sample 1.

(Example 2) Production of polymer for which the total monomer concentration was 2.4 mol/L

To a flask to which BIS (4625.10 mg, 20 mol%) and CTAB (36.445 mg, 2 mM) had been added, DMAPM (14045.63 mg (14942.15 mL), 55 mol%) was added to dissolve a part of BIS, and then 30 mL of MilliQ water was added. The mixture was heated up to 70°C with stirring with a mechanical stirrer, then a solution prepared by dissolving TABm (4773.00 mg, 25 mol%) in methanol (12 mL) was added thereto and bubbled with nitrogen for 30 minutes. An acetone solution (250 $\mu$L) containing AIBN (21.18 mg, 2.58 mM) was added to the mixture to give a reaction mixture, which was then polymerized in a nitrogen atmosphere at 70°C for 3 hours to give a polymer precipitate. The polymer precipitate was immersed overnight in water, and the polymer was ground with a hand mixer to give a slurry. The slurry was filtered, and the collected polymer was freeze-dried to give a sample 2.

(Comparative Example 3) Production of polymer for which the total monomer concentration was 0.31 mol/L

A polymer was synthesized in the same manner as in Synthesis Example 1 in WO2016/024633.

Specifically, 1 L of pure water was put into a three-neck flask, heated up to 70°C, then 2 mM of CTAB was added, further a methanol solution containing DMAPM (55 mol%) and TBAm (43 mol%), and BIS (2 mol%) were added and dissolved to make the total monomer concentration 0.31 mol/L. While kept at 70°C, the mixture was stirred with a mechanical stirrer and bubbled with nitrogen for 1 hour. 5 mL of an aqueous solution containing 2,2'-azobis(2-methylpropionamidine) dihydrochloride (700 mg) was added to the mixture to give a reaction mixture, which was then polymerized in a nitrogen atmosphere at 70°C for 3 hours to give polymer particles having a particle diameter of 800 nm (comparative sample 3).

For the samples produced in Examples and Comparative Examples, the amount of each component of the reaction mixture used for polymer synthesis is shown in Table 1. In the comparative sample 3 in the following Table, 2,2'-azobis(2-methylpropionamidine) dihydrochloride was used as an initiator (see * in the Table).

[Table 1]

| Sample No | Monomer | | | | | | Surfactant | | Initiator | | Total Monomer Concentration |
|---|---|---|---|---|---|---|---|---|---|---|---|
| | Amino Group-Having Monomer | | Hydrophobic Group-Having Monomer | | Polyfunctional Monomer | | | | | | |
| | DMAPM | | TBAm | | BIS | | CTAB | | AIBN | | |
| | Proportion (mol%) | Content (mg) | Proportion (mol%) | Content (mg) | Proportion (mol%) | Content (mg ) | Concentration (mM) | Content (mg) | Concentration (mM) | Content (mg ) | (mol/L) |
| Comparative Example 1 | 55 | 5842.98 | 35 | 2779.80 | 10 | 962.02 | 2 | 36.445 | 2.58 | 21.18 | 1.1 |
| Comparative Example 2 | 55 | 2921.49 | 35 | 1389.90 | 10 | 481.01 | 2 | 36.445 | 2.58 | 21.18 | 0.57 |
| Sample 1 | 55 | 9363.75 | 25 | 3182.00 | 20 | 3083.40 | 2 | 36.445 | 2.58 | 21.18 | 1.7 |
| Sample 2 | 55 | 14045.63 | 25 | 4773.00 | 20 | 4625.10 | 2 | 36.445 | 2.58 | 21.18 | 2.4 |
| Comparative Example 3 | 55 | - | 43 | - | 2 | - | 2 | - | 2.58* | - | 0.31 |

Measurement results of the yield and the reversible $CO_2$ absorption amount of samples 1 and 2 and comparative samples 1 to 3 are shown in Table 2. Here, "yield" is a yield (%) of an actual production quantity to a theoretical yield of the polymer calculated from each monomer amount used in the reaction mixture.

[Table 2]

| Sample No | Yield (%) | Reversible $CO_2$ Absorption Amount (mL/g) |
|---|---|---|
| Comparative Example 1 | 84 | 48 |
| Comparative Example 2 | 77 | 47 |
| Sample 1 | 85 | 50 |
| Sample 2 | 82 | 53 |
| Comparative Example 3 | 60 | |

As shown in Table 2, the samples 1 and 2 were excellent in the reversible $CO_2$ absorption amount, and the sample 2 was the most excellent. In addition, the yield of the samples 1 and 2 was greatly improved than the comparative sample 3. The yield of the samples 1 and 2 was equal to that of the comparative samples 1 and 2. Namely, the yield of the sample 2 for which the total monomer concentration was high was equal to the yield of the sample 1 and the comparative samples 1 and 2 for which the total monomer concentration was low. This indicates that the yield can be increased without increasing the production container, showing that the production method of the present invention is industrially advantageous.

Water was added to each sample to investigate the water content thereof, and as a result, it was shown that the samples 2 and 1 and the comparative samples 1, 2 and 3 had a smaller water content in that order.

The sample 2 was subjected to a durability test of carrying out a reversible gas absorption test for a total of 50 times, and as a result, the same reversible $CO_2$ absorption amount as that of the 1st measurement was shown in the 50th measurement, which confirmed that the sample 2 had sufficient durability.

As a modification case of the sample 2, a polymer sample was produced for which methanol with no TBAm was added to the reaction mixture in place of the TBAm methanol solution the proportion of DMAPM was 80 mol%, and the polymer sample was subjected to a reversible $CO_2$ absorption test, in which the reversible $CO_2$ absorption amount of the polymer sample tested increased than that of the sample 2. The reversible $CO_2$ absorption amount was a larger value than that of another polymer sample prepared by adding water in place of methanol (that is, produced by using 100% water as a solvent).

As a modification case of the sample 2, a polymer sample was produced for which dimethylaminopropylacrylamide (DMAPAAm) was used as a monofunctional monomer in place of DMAPM, and this obtained the same result as that of the sample 2.

[2] Investigation of Polyfunctional Monomer Concentration and Action of Surfactant (Example 3) Production of polymer not using a surfactant (CTAB)

A freeze-dried polymer (sample 3) was produced in the same manner as in Example 1 except that CTAB was not added to the reaction mixture.

(Comparative Example 4) Production of polymer for which the proportion of the polyfunctional polymer (BIS) was 10 mol%

A freeze-dried polymer (comparative sample 4) was produced in the same manner as in Example 3 except that, among the monomers, the proportion of TBAm was changed to 35 mol% and the proportion of BIS was to 10 mol%.

(Comparative Example 5) Production of polymer for which the proportion of the polyfunctional polymer (EGDMA) was 10 mol%

A freeze-dried polymer (comparative sample 5) was produced in the same manner as in Example 1 except that, among the monomers, the proportion of TBAm was changed to 35 mol% and ethylene glycol dimethacrylate (EGDMA) was used in place of BIS and the proportion thereof was 10 mol%.

For the samples produced in Example 3 and Comparative Examples 4 and 5, the amount of each component of the reaction mixture used for polymer synthesis is shown in Table 3. In the comparative sample 5 in the following Table, EGDMA was used as a polyfunctional monomer (see * in the Table).

[Table 3]

| Sample No | Monomer | | | | | | Surfactant | | Initiator | | Total Monomer Concentration |
|---|---|---|---|---|---|---|---|---|---|---|---|
| | Amino Group-Having Monomer | | Hydrophobic Group-Having Monomer | | Polyfunctional Monomer | | | | | | |
| | DMAPM | | TBAm | | BIS | | CTAB | | AIBN | | |
| | Proportion (mol%) | Content (mg) | Proportion (mol%) | Content (mg) | Proportion (mol%) | Content (mg) | Concentration (mM) | Content (mg) | Concentration (mM) | Content (mg) | (mol/L) |
| Sample 3 | 55 | 9363.75 | 25 | 3182.00 | 20 | 3083.40 | 0 | 0 | 2.58 | 21.18 | 1.7 |
| Comparative Sample 4 | 55 | 9363.75 | 35 | 4454.80 | 10 | 1541.70 | 0 | 0 | 2.58 | 21.18 | 1.7 |
| Comparative Sample 5 | 55 | 9363.75 | 35 | 4454.80 | 10* | 1541.70* | 2 | 36.445 | 2.58 | 21.18 | 1.7 |

Water was added to the sample 1 produced in Example 1, and to the sample 3 and the comparative samples 4 and 5 produced in this section. The comparative samples 4 and 5 which had used a polyfunctional monomer (BIS or EGDMA) in an amount of 10 mol% both had a high water content, and swelled and became soft. However, the samples 1 and 3 which had used BIS in an amount of 20 mol% had a relatively small water content and remained hard. This shows that, for obtaining a polymer having a small swelling degree, it is necessary to use a polyfunctional monomer in a proportion of 15 mol% or more. The sample 1 which had used a surfactant (CTAB) was compared with the sample 3 not using CTAB. Only in the sample 3, a transparent phase was somewhat seen in the vicinity of the surface thereof. This shows that, for obtaining a uniform polymer, it is preferable to add a surfactant to the reaction mixture.

(Comparative Examples 6 to 8) Production of polymer for which the proportion of the polyfunctional monomer (BIS) was 0 to 10 mol% and the total monomer concentration was 2.4 mol/L

Freeze-dried polymers (comparative samples 6 to 8) were produced in the same manner as in Example 2 except that, among the monomers, the proportion of TBAm and BIS was changed as in Table 4.

(Example 4) Production of polymer for which the proportion of the polyfunctional monomer (BIS) was 30 mol% and the total monomer concentration was 2.4 mol/L

A freeze-dried polymer (sample 4) was produced in the same manner as in Example 2 except that, among the monomers, the proportion of TBAm and BIS was changed as in Table 4.
For the samples produced in Comparative Examples 6 to 8 and Example 4, the amount of each component of the reaction mixture used for polymer synthesis is shown in Table 4, along with that for the sample 2 produced in Example 2

[Table 4]

| Sample No | Monomer | | | | | | Surfactant | | Initiator | | Total Monomer Concentration |
|---|---|---|---|---|---|---|---|---|---|---|---|
| | Amino Group-Having Monomer | | Hydrophobic Group-Having Monomer | | Polyfunctional Monomer | | | | | | |
| | DMAPM | | TBAm | | BIS | | CTAB | | AIBN | | |
| | Proportion (mol%) | Content (mg) | Proportion (mol%) | Content (mg) | Proportion (mol%) | Content (mg) | Concentration (mM) | Content (mg) | Concentration (mM) | Content (mg) | (mol/L) |
| Comparative Sample 6 | 55 | 14045.63 | 45 | 3574.02 | 0 | 0 | 2 | 36.445 | 2.58 | 21.18 | 2.4 |
| Comparative Sample 7 | 55 | 14045.63 | 40 | 3176.91 | 5 | 1156.28 | 2 | 36.445 | 2.58 | 21.18 | 2.4 |
| Comparative Sample 8 | 55 | 14045.63 | 35 | 2779.80 | 10 | 2312.55 | 2 | 36.445 | 2.58 | 21.18 | 2.4 |
| Sample 2 | 55 | 14045.63 | 25 | 1985.57 | 20 | 4625.10 | 2 | 36.445 | 2.58 | 21.18 | 2.4 |
| Sample 4 | 55 | 14045.63 | 15 | 1191.34 | 30 | 6937.65 | 2 | 36.445 | 2.58 | 21.18 | 2.4 |

Water was added to the sample 2 produced in Example 2, and to the sample 4 and the comparative samples 6 to 8 produced in this section. The comparative sample 6 not using a polyfunctional monomer (BIS), and comparative samples 7 and 8 in which the proportion of BIS was 5 mol% or 10 mol% all had a high water content, and swelled and became soft. However, the samples 2 and 4 in which the proportion of BIS was 20 mol% or 30 mol% did not swell and remained hard. The yield and the reversible $CO_2$ absorption amount were equivalent in Comparative Samples 7 and 8 and Samples 2 and 4 (BIS concentration: 5 to 30 mol %). However, when the polymer material in which the BIS concentration was more than 30 mol% was tested, the reversible $CO_2$ absorption amount thereof tended to decrease. This shows that, for obtaining a polymer having a small water content and a small swelling degree, a polyfunctional monomer need to be used in a proportion of 15 mol% or more, and for sufficiently expressing a reversible $CO_2$ absorption performance, the proportion of the polyfunctional monomer need to be 30 mol% or less in polymer production.

As a modification case of the sample 2, a polymer sample was produced for which 20 mol% of EGDMA was used as a polyfunctional monomer in place of BIS, and the polymer sample was subjected to a reversible $CO_2$ absorption test, in which the reversible $CO_2$ absorption amount of the polymer sample tested was equivalent to that of the sample 2. Of the polymer sample produced using 20 mol% of EGDMA, the water content and the swelling volume were obviously smaller than those of comparative samples in which the proportion of EGDMA was 5 mol% or 10 mol% (about 1/3 of the case of 10 mol% EGDMA, and less than 1/2 of the case of 5 mol% EGDMA), and the polymer sample had a remarkably large reversible $CO_2$ absorption amount (about 1.5 times of the case of 10 mol% EGDMA, and more than 2 times of the case of 5 mol% EGDMA).

[3] Investigation of Solvent

(Examples 5, 6) Production of polymer for which the total monomer concentration was 3.0 mol/L

Freeze-dried polymers (samples 5, 6) were produced in the same manner as in Example 2 except that the amount of MilliQ water to be added to the reaction mixture and the amount of methanol for dissolving TBAm (amount of methanol to be added to the reaction mixture) were changed as in Table 5.

The amount of MilliQ water and methanol added to the reaction mixture in Examples 2, 5 and 6, and the reversible $CO_2$ absorption amount measured for the samples 2, 5 and 6 are shown in Table 5.

[Table 5]

| Sample No | Milli Q Water (mL) | Methanol (mL) | Total Monomer Concentration (mol/L) | Reversible $CO_2$ Absorption Amount (mL/g) |
|---|---|---|---|---|
| Sample 2 | 30 | 12 | 2.4 | 53 |
| Sample 5 | 15 | 12 | 3.0 | 20 |
| Sample 6 | 27 | 0 | 3.0 | 10 |

In both Examples 5 and 6, the polymer water content was 0.7 g ($H_2O$)/1 g (hydrous polymer) or less, and good polymers having a small water content were obtained in these. As show in Table 5, the reversible $CO_2$ absorption amount of the sample 5 in which the amount of the solvent was reduced was further lower than that of the sample 2. When only water was in the solvent composition with no alcohol, the reversible $CO_2$ absorption amount further lowered. From this, it is known that, by intensely reducing the solvent amount, the concentration of the low-polar monomer such as TBAm in the polymer increases during polymerization so that the local environment around the amine inside the gel becomes greatly poorly polar and the amine basicity lowers to decrease the reversible $CO_2$ absorption amount. It is also known that, even when the monomer is liquid, a certain amount of a solvent such as water or alcohol need to be added to the reaction mixture. The sample 5 using methanol exhibited a larger reversible $CO_2$ absorption amount than that of the sample 6 not using methanol, which indicates that concurrent use of alcohol such as methanol as the solvent is preferred.

Polymer materials were produced in the same manner as in Examples 2, 5 and 6 except that ethanol, isopropanol, butanol or t-butanol was used in place of methanol, and tested, and the same results as in the case of using methanol were obtained.

[4] Production of Polymer subjected to amine infiltration step

(Example 7) Production of polymer subjected to an amine infiltration step, using DMAm (monofunctional monomer not having amino group) as a monofunctional monomer

Dimethylacrylamide (DMAm: 80 mol%), BIS (20 mol%) and CTAB (2 mM) were dissolved in MilliQ water to prepare a mixture having a total amount of 50 mL. With heating up to 70°C, the mixture was bubbled with nitrogen for 30 minutes. Nitrogen-bubbled methanol (12 mL) was added to the mixture, and an acetone solution (250 $\mu$L) containing AIBN (2.58 mM) was added thereto to prepare a reaction mixture, which was then polymerized in a nitrogen atmosphere at 70°C for 3 hours to give a polymer precipitate. The polymer precipitate was statically left overnight in water, then ground with a hand mixer and filtered to recover a polymer (hydrous polymer). The water content of the collected polymer was 0.6774 g ($H_2O$)/1 g (hydrous polymer).

1 g of the resultant polymer was weighed, and an amine-containing processing liquid of 2-(isopropylamino)ethanol (IPAE: 7490 $\mu$L) was added and infiltrated thereinto. The resultant amine-containing processing liquid was gradually stirred overnight with a shaker to substitute the water that the polymer contained with 8 N IPAE, and filtered to give an IPAE-infiltrated polymer material (sample 7).

(Example 8) Production of Polymer subjected to a step of swelling polymer with an amine solution using NiPAm (monofunctional monomer not having an amino group) as a monofunctional monomer

A polymer material (sample 8) infiltrated with 8 N IPAE was produced in the same manner as in Example 7 except that N-isopropylacrylamide (NiPAm) was used in place of DMAm.

(Example 9) Production of Polymer subjected to a step of swelling polymer with an amine solution using DMAPM (amino group-having monofunctional monomer) and TBAm (hydrophobic group-having monofunctional monomer) as monofunctional monomers

A polymer produced in the same manner as in Example 2 was statically left overnight in water, then ground with a hand mixer and filtered to collect a hydrous polymer. The water content of the polymer was substituted with 8 N IPAE according to the same process as in Example 7 to give a polymer material infiltrated with 8 N IPAE (sample 9)

(Example 10) Production of Polymer subjected to a step of swelling polymer with an amine solution using DMAPM (amino group-having monofunctional monomer) as a monofunctional monomer

A polymer material (sample 10) infiltrated with 8 N IPAE was produced in the same manner as in Example 9 except that methanol not added with TBAm was added to the reaction mixture in place of the methanol solution of TBAm and the proportion of DMAPM was 80 mol%.

The component amount in the reaction mixture used in polymer synthesis for the samples produced in Examples 7 to 10 is shown in Table 6.

[Table 6]

| Sample No | Monomer Composition | Surfactant (CTAB) (mM) | Initiator (AIBN) (mM) | Total Monomer Concentration (mol/L) |
|---|---|---|---|---|
| Sample 7 | DMAm: 80 mol% BIS: 20 mol% | 2 | 2.58 | 2.4 |
| Sample 8 | NiPAm: 80 mol% BIS: 20 mol% | 2 | 2.58 | 2.4 |
| Sample 9 | DMAPM: 55 mol% TBAm: 25 mol% BIS: 20 mol% | 2 | 2.58 | 2.4 |
| Sample 10 | DMAPM: 80 mol% BIS: 20 mol% | 2 | 2.58 | 2.4 |

The reversible $CO_2$ absorption amount in the samples 7 to 10 swollen with an amino solution greatly increased as compared with the reversible $CO_2$ absorption amount in the polymer samples produced in the same manner except that they were swollen with water. In the samples 7 and 8, the amount increased by about 3 times: in the sample 9, the amount increased by about 5 times; and in the sample 10, the amount increased by about 2 times. In addition, it is also shown that, by improving the substitution ratio of water with IPAE, the reversible gas absorption performance can be

further increased.

[5] Production of Sheet

(Example 11) Production of Sheet using polymer

A polymer precipitate synthesized in the same manner as in Example 2 was collected by filtration and ground to give a polymer powder. The polymer powder and polyethylene pellets were kneaded in a ratio by mass of 1/2 and molded by biaxial extrusion, the resultant strands were expanded with a roller to have a width of about 4 mm, then pelletized with a pelletizer to be 5 mm or so to give sheets each having a thickness of 200 μm, a width of 4 mm and a length of 5 mm or so. The sheets were subjected to a reversible gas absorption test, and had a reversible $CO_2$ absorption amount of 33 mL/g. This confirms that the produced polymer exhibits reversible gas absorption performance as sheets.

[6] Investigation of concentration of polyfunctional monomer and total monomer concentration

(Comparative Example 9) Production of Polymer for which the proportion of the polyfunctional monomer (BIS) was 5 mol% and the total monomer concentration was 2.3 mol/L

Dimethylaminopropylacrylamide (DMAPAAm: 95 mol%) and BIS (5 mol%) were dissolved in MilliQ water at 60°C to give an aqueous solution having a total amount of 30 mL, then ethanol was added thereto to prepare a mixture in such a manner that the total monomer concentration in the reaction mixture to be processed in the subsequent step could be 2.3 mol/L. The mixture was heated up to 70°C, and then bubbled with nitrogen for 30 to 60 minutes with stirring. A solution prepared by adding AIBN to a mixed solvent of acetone and water (AIBN concentration in the reaction mixture: 2.58 mM) was added to the mixture to give a reaction mixture, which was polymerized in a nitrogen stream atmosphere at 70°C for 3 hours to give a polymer sample (comparative sample 9).

(Comparative Example 10, Examples 11, 12) Production of Polymer for which the proportion of the polyfunctional monomer (BIS) was 10 to 30 mol% and the total monomer concentration was 2.3 mol/L

Polymer materials (comparative sample 10, samples 11, 12) were produced in the same manner as in Comparative Example 8 except that the proportion of DMAPAAm and BIS was changed as in Table 7.

(Examples 13 to 16) Production of Polymer for which the proportion of the polyfunctional monomer (BIS) was 20 mol% and the total monomer concentration was 0.54 to 2.3 mol/L

Polymer materials (samples 13 to 16) were produced in the same manner as in Comparative Example 9 except that the proportion of DMAPAAm and BIS was DMAPAAm/BIS = 80 mol%/20 mol% and the reaction mixture was prepared so that the total monomer concentration could be as in Table 7.

The monomer composition and the total monomer concentration of the reaction mixture used for polymer synthesis for the samples produced in Comparative Examples 9 and 10 and Examples 11 to 16, as well as the measurement results of the water content, the swollen volume and the reversible $CO_2$ absorption amount of the polymer materials are shown in Table 7. In Table 7, "g (wet)" means a polymer weight in wet, "mL (wet)" means a polymer volume in wet, and "g/dry" means a polymer weight in dry, for which the unit is g or mL.

[Table 7]

| Sample No | Monomer Composition | Total Monomer Concentration (mol/L) | Water Content g (wet)/g (dry) | Swollen Volume mL (wet)/g (dry) | Reversible $CO_2$ Absorption Amount mL/mL (wet) |
|---|---|---|---|---|---|
| Comparative Sample 9 | DMAPAAm : 95 mol% BIS: 5 mol% | 2.3 | 3.8 | 4.5 | 18.71 |
| Comparative Sample 10 | DMAPAAm: 90 mol% BIS: 10 mol% | 2.3 | 2.8 | 3.4 | 23.03 |

(continued)

| Sample No | Monomer Composition | Total Monomer Concentration (mol/L) | Water Content g (wet)/g (dry) | Swollen Volume mL (wet)/g (dry) | Reversible $CO_2$ Absorption Amount mL/mL (wet) |
|---|---|---|---|---|---|
| Sample 11 | DMAPAAm: 80 mol% BIS: 20 mol% | 2.3 | 1.8 | 2.7 | 24.37 |
| Sample 12 | DMAPAAm: 70 mol% BIS: 30 mol% | 2.3 | 1.7 | 2.5 | 24.00 |
| Sample 13 | DMAPAAm: 80 mol% BIS: 20 mol% | 0.54 | 5.8 | 6.0 | 9.72 |
| Sample 14 | DMAPAAm: 80 mol% BIS: 20 mol% | 1.0 | 3.4 | 3.9 | 15.69 |
| Sample 15 | DMAPAAm: 80 mol% BIS: 20 mol% | 1.7 | 2.7 | 3.5 | 18.37 |
| Sample 16 | DMAPAAm: 80 mol% BIS: 20 mol% | 2.3 | 1.9 | 2.7 | 22.96 |

In Table 7, the comparative samples 9 and 10, and samples 11 and 12, in which the total monomer concentration in the reaction mixture was 2.3 mol/L and the proportion of the polyfunctional monomer (BIS) was varied, were compared. It is known that the samples 11 and 12, in which the proportion of BIS was more than 10 mol% and 30 mol% or less, had a suppressed water content and a suppressed swelling degree and had an improved reversible $CO_2$ absorption amount per unit volume, as compared with the comparative samples 9 and 10, in which the proportion of BIS was 10 mol% or less. The samples 13 to 16, in which the proportion of the polyfunctional monomer was 20 mol% and the total monomer concentration in the reaction mixture was varied, were compared. It is known that the samples having a larger total monomer concentration in the reaction mixture had a lower water content and a lower swelling degree and had a larger reversible $CO_2$ absorption amount per unit volume. From this, it is known that, by controlling the proportion of the polyfunctional monomer to fall within a predetermined range and further by increasing the polymerization concentration (the total monomer concentration in the reaction mixture), materials having a larger reversible $CO_2$ absorption amount per unit volume can be realized. Such materials can attain a sufficient reversible $CO_2$ absorption amount even when used relatively in a small volume, and are therefore advantageous in that they can reduce the quantity of heat for temperature elevation.

[7] Investigation of Initiator Type

(Example 17) Production of Polymer using 2,2'-azobis(2,4-dimethylvaleronitrile) (V-65) as an initiator

DMAPAAm (80 mol%), BIS (20 mol%) and MilliQ water were put into a 5-L separable flaks (first reactor), immersed in a hot bath at 50°C, and stirred. Ethanol was added to the mixture and the liquid amount thereof was so controlled that the total monomer concentration in the reaction mixture to be reacted in the subsequent step could be 3 mol/L and the total amount could be 3000 mL. The mixture was stirred at 100 rpm for 1 hour with bubbling with nitrogen, and then the first reactor was immersed in a hot bath at 55°C. Subsequently, the temperature of the hot bath was lowered to 45°C and the first reactor was depressurized, and thereafter an initiator V-65 (2.58 mM) was added to the mixture, and stirred at 240 rpm for 2 minutes to prepare a reaction mixture. The reaction mixture was transferred to a stainless reactor (second reactor) through a tube, then the second reactor was immersed in a hot bath at 55°C and reacted for 3 hours. This was taken out of the water bath and left slightly cooled to give a polymer material (sample 17).
The water content of the sample 17 was 2.5 g (wet)/g (dry) and the reversible $CO_2$ absorption amount thereof was 69.5 mL/g (dry).
V-65 is an initiator that initiates reaction at 47°C, and by using this, polymerization reaction can be carried out

at a relatively low temperature (here, at 55°C). Under the same condition, when the polymerization reaction was carried out in a resin container (polyethylene bag), the same polymer material was also synthesized. Further, the polymerization reaction can also be carried out while the monomer solution (mixture) is kept funneled onto a conveyor.

[8] Investigation of Reversible $CO_2$ Absorption Amount of Ground Polymer

The polymer material synthesized in the above Examples was ground with a meat chopper or a Fitz mill, and the reversible $CO_2$ absorption amount thereof was measured. Irrespective of the grinding method, the reversible $CO_2$ absorption amount was the same.

[9] Investigation of the effect of fine particles added to polymer material

(Examples 18, 19) Production of fine particles-containing polymer material

A polymer material was produced in the same manner as in Comparative Example 9 except that the ratio of DMAPAAm to BIS was DMAPAAm/BIS = 85 mol%/15 mol%. The water content of the polymer material was 73.7% by weight.

The polymer material was ground successively through a meat chopper at an opening degree of 4.5 mm (hole diameter 4.8 mm), 3.9 mm (hole diameter 4.0 mm), 3 mm (hole diameter 3.2 mm), 2.1 mm (hole diameter 2.4 mm), and 0.9 mm (hole diameter 1.1 mm) to give various ground polymer products that had been ground at a different grinding degree. A water-repellent silica RY300 (AEROSIL RY300, by Evonik Corporation, average primary particle size: 7 nm, water contact angle: 100° or more) was added to the ground polymer products in the blending ratio shown in Table 8 to produce fine particles-containing polymer materials.

The fine particles-containing polymer material was put into a 250-mL plastic container and mixed by shaking, and then the surface was smoothed and the height was measured. The results are shown in Table 8. Among the fine particles-containing polymer materials, the particle size distribution of the fine particles-containing polymer material in which the proportion of the water-repellent silica RY300 was 0.50% by volume is shown in Fig. 3. The fine particles-containing polymer material (sample 18) prepared by adding the water-repellent silica RY300 (0.50% by volume) to the ground polymer that had been ground at an opening degree of 2.1 mm, and the ground polymer (sample 19) that had been ground at an opening degree of 2.1 mm were analyzed according to a pressure swing absorption method to measure the $CO_2$ absorption amount thereof in the absorption step and the $CO_2$ desorption amount thereof in the desorption step, and the data are shown in Fig. 4. In Figs. 3 and 4, "0.9 mm-opening polymer" to "4.5 mm-opening polymer" each represent ground polymers that had been ground at an opening degree of 0.9 mm to 4.5 mm, and "RY300" represents water-repellent silica RY300.

In the pressure swing absorption method, the reversible $CO_2$ absorption performance was evaluated according to the following process.

First, a sample targeted for measurement (10 L) put in a reactor was fully humidified in a constant-temperature bath at a temperature of 40°C and a relative humidity of more than 98%, and then the temperature thereof was conditioned at 30°C. Subsequently, a humidified mixed gas of $CO_2$ and $N_2$ ($CO_2$ concentration: 10.03% by volume) was applied to the sample targeted for measurement at a flow rate of 1000 mL/min and the gas desorbed from the sample was analyzed to measure the $CO_2$ concentration (A) thereof, using a multi-gas analyzer (VA-3000, by Horiba, Ltd.) (absorption step). Next, the gas to be applied to the sample was changed to a humidified $N_2$ gas and the gas was applied to the sample at a flow rate of 1000 mL/min, and the $CO_2$ concentration (A) of the gas desorbed from the sample was measured (desorption step). An integrated value of the difference between the $CO_2$ concentration of the applied mixed gas and the $CO_2$ concentration (A) measured in the absorption step is referred to as a $CO_2$ absorption amount, and an integrated value of the $CO_2$ concentration (B) measured in the desorption step is referred to as a $CO_2$ desorption amount. From these, the reversible $CO_2$ absorption performance of the sample was evaluated. In showing the $CO_2$ absorption amount measured here on graphs, the value may be shown on the minus side of the vertical axis by a reference numeral "-", in order to distinguish the measured $CO_2$ absorption amount from the $CO_2$ desorption amount.

[Table 8]

| Condition of Mixture | Height of Fine Particles-Containing Polymer Material in 250-mL Container | | | | | | | | |
|---|---|---|---|---|---|---|---|---|---|
| Ground Polymer/ Water-Repellent Silica RY300 | vol%: vol% | 100.00: 0.00 | 99.90: 0.10 | 99.75: 0.25 | 99.50: 0.50 | 99.25: 0.75 | 99.00: 1.00 | 98.50: 1.50 | 98.00: 2.00 |
| | weight (g): weight (g) | 50.00: 0.00 | 49.90: 0.10 | 49.75: 0.25 | 49.50: 0.50 | 49.26: 0.74 | 49.01: 0.99 | 48.52: 1.48 | 48.04: 1.96 |
| Grinding Degree of Ground Polymer | 3.9 mm opening | 3.7 cm | 3.8 cm | 3.0 cm | 3.0 cm | 3.0 cm | 3.2 cm | 3.3 cm | 3.6 cm |
| | 3 mm opening | 3.5 cm | 3.8 cm | 3.4 cm | 2.9 cm | 2.9 cm | 3.1 cm | 3.2 cm | 3.5 cm |
| | 2.1 mm opening | 3.9 cm | 3.7 cm | 3.3 cm | 3.0 cm | 3.1 cm | 3.2 cm | 3.5 cm | 3.7 cm |
| | 0.9 mm opening | 3.8 cm | 3.7 cm | 3.1 cm | 3.0 cm | 3.1 cm | 3.2 cm | 3.4 cm | 3.6 cm |

As shown in Table 8, the volume (filling ration) of the polymer material varied by varying the proportion of the water-repellent silica RY300. When the proportion of the water-repellent silica RY300 was 0.50% by volume, the volume was the smallest (that is, the filling ration was large). Also as shown in Fig. 4, the fine particles-containing polymer material (sample 18) having a large filling ration greatly improved in the reversible $CO_2$ absorption amount per unit mass and in the $CO_2$ absorption/desorption speed as compared with the ground polymer (sample 19) not containing the water-repellent silica RY300.

From this, it is known that, by adding fine particles, the filling ration of the polymer material can be increased to improve the reversible $CO_2$ absorption amount and the $CO_2$ absorption/desorption speed.

[10] Investigation of Effect to be attained by Grinding Fine Particles-Containing Polymer Material

(Example 20) Production of ground product of fine particles-containing polymer by further finely grinding fine particles-containing polymer material

Among the ground polymers produced in Example 18, a ground polymer prepared by grinding at an opening degree of 4.5 mm with a meat chopper and a water-repellent silica RY300 were mixed in a ratio by volume, ground polymer/water-repellent silica RY300 = 99.5/0.5 to prepare a fine particles-containing polymer material. The fine particles-containing polymer material was ground using a planetary ball mill (P-5, by Fritsch Japan) with zirconia beads having a diameter of 5 mm, at 230 rpm to prepare a ground fine particles-containing polymer material (ground fine particles-containing polymer, sample 20). The particle size distribution of the sample 20 was measured, and it was confirmed that most of the ground polymer product had a particle diameter of less than 100 $\mu$m. The water content of the sample 20 was 72.45% by weight, and the water content of the ground polymer contained in the sample 19 was 73.17% by weight, that is, these were somewhat smaller than the water content of the unground polymer material (73.7% by weight).

Fig. 5 shows the $CO_2$ absorption amount of the sample 20 and the sample 18 in the absorption step, as measured according to a pressure swing absorption method. Here, 10 L of the gas-absorbing material was used as a sample targeted for measurement, and the flow rate of a mixed gas of $CO_2$ and $N_2$ and the flow rate of $N_2$ gas each were 3000 mL/min in measurement.

From Fig. 5, it is known that the $CO_2$ absorption speed of the ground fine particles-containing polymer that had been ground in a bead mill (sample 20) dramatically increased as compared with that of the fine particles-containing polymer material not ground in a bead mill (sample 18). From this, it is known that, by increasing the grinding degree of the fine particles-containing polymer material, the reversible $CO_2$ absorption performance thereof can be higher.

Structures of the monomers, the surfactant and the initiators used in the above Examples are shown below.

<Monofunctional Monomers>

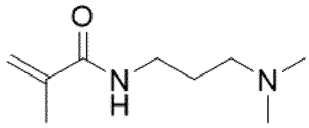

DMAPM
(N-[3-(Dimethylamino)propyl]methacrylamide)

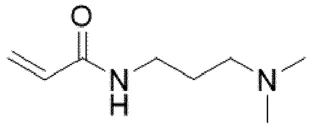

DMAPAAm
(N-[3-(Dimethylamino)propyl]acrylamide)

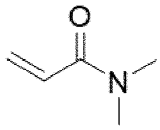

DMAm
(N,N -Dimethylacrylamide)

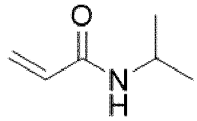

NiPAm
(N-isopropylacrylamide)

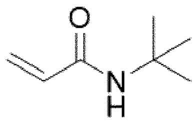

TBAm
(N-tert-Butylacrylamide)

<Polyfunctional Monomers>

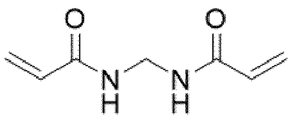

BIS
(N,N'-Methylenebisacrylamide)

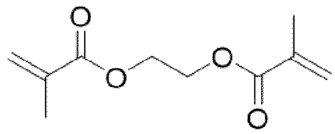

EGDMA
( Ethylene Glycol Dimethacrylate )

<Surfactant>

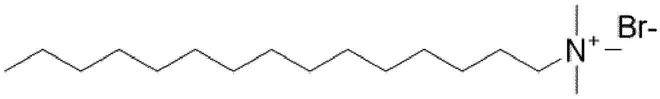

CTAB
(Cetyltrimethylammonium Bromide)

<Initiators>

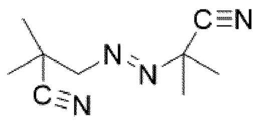

AIBN

(2,2'-Azobis(2-methylpropionitrile))

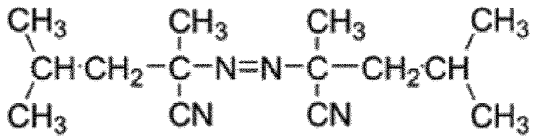

V-65

(2,2'-Azobis(2,4-dimethylvaleronitrile))

Industrial Applicability

According to the production method of the present invention, a polymer having a large reversible gas absorption amount, though having a low water content, can be produced efficiently. Therefore, when the polymer of the present invention is used, a gas absorbing material having high reversible $CO_2$ absorption capacity and good handleability can be provided at low cost. Accordingly, the industrial applicability of the present invention is great.

Reference Signs List

| | |
|---|---|
| 21 | Heat Exchanger |
| 22, 33 | Desulfurizer |
| 23 | Gas Absorbent |
| 24 | First Pipe |
| 25 | Second Pipe |
| 26 | Third Pipe |
| 26a | Circulation Route |
| 26b | Branch Route |
| 31 | First Heat Exchanger |
| 32 | Second Heat Exchanger |
| 34 | First Tank |
| 35 | Second Tank |
| 36 | First Pipe |
| 37 | Second Pipe |
| 37a | Main Route |
| 37b | First Route |
| 37c | Second Route |
| 38,39 | Gas Absorbent |

**Claims**

1. An amine-containing polymer material that contains a polymer of a monomer mixture consisting of a monofunctional monomer and more than 10 mol% and 30 mol% or less of a polyfunctional monomer.

2. The polymer material according to claim 1, wherein the monofunctional monomer has an amino group.

3. The polymer material according to claim 1 or 2, wherein the polyfunctional monomer is an N,N'-alkylenebis(meth)acrylamide.

4. The polymer material according to claim 1 or 2, wherein the polyfunctional monomer has an amino group.

5. The polymer material according to claim 1 or 2, wherein the polyfunctional monomer has plural amino groups.

6. The polymer material according to any one of claims 1 to 5, containing a surfactant.

7. The polymer material according to any one of claims 1 to 6, wherein the monomer mixture contains a monomer having a hydrophobic group.

8. The polymer material according to any one of claims 1 to 6, which is a polymer material for gas absorption.

9. The polymer material according to any one of claims 1 to 8, wherein when one gram of a dry polymer is immersed in water overnight at 30°C, the water content of the polymer is 3 g or less.

10. A method for producing a polymer material comprising:

a polymer synthesis step of synthesizing a polymer by polymerizing monomers in a reaction mixture containing a monofunctional monomer, a polyfunctional monomer, a solvent and an initiator, and
an amine infiltration step of infiltrating an amine-containing processing liquid into the polymer, wherein:
the total monomer concentration in the reaction mixture is 0.7 mol/L or more,
the proportion of the polyfunctional monomer among the monomers contained in the reaction mixture is 10 to 30 mol%, and
when the monofunctional monomer has an amino group, the amine infiltration step can be omitted.

11. The method for producing a polymer material according to claim 10, wherein the monofunctional monomer has an amino group, and the amine infiltration step is carried out.

12. The method for producing a polymer material according to claim 10, wherein the monofunctional monomer has an amino group, and the amine infiltration step is omitted.

13. The method for producing a polymer material according to any one of claims 10 to 12, wherein the reaction mixture contains a surfactant.

14. The method for producing a polymer material according to any one of claims 10 to 13, wherein the polymer obtained in the polymer synthesis step is ground.

15. The method for producing a polymer material according to any one of claims 10 to 14, wherein the polymer obtained in the polymer synthesis step is filtered.

16. The method for producing a polymer material according to any one of claims 10 to 15, wherein the polymer obtained in the polymer synthesis step is dried.

17. The method for producing a polymer material according to any one of claims 10 to 16, wherein water and an alcohol are used as solvents.

18. The method for producing a polymer material according to any one of claims 10 to 17, wherein the reaction mixture contains a monomer having a hydrophobic group.

19. The method for producing a polymer material according to claim 18, which has, before the polymer synthesis step, a step of heating a mixture containing an amino group-having monomer, a polyfunctional monomer and water and then adding a monomer having a hydrophobic group to the mixture.

20. The method for producing a polymer material according to claim 19, wherein the hydrophobic group-having monomer is added as an alcohol solution thereof.

21. The method for producing a polymer material according to any one of claims 18 to 20, wherein the total monomer

concentration in the reaction mixture is 3 mol/L or less.

**22.** A polymer material produced according to the production method of any one of claims 10 to 21.

**23.** A gas-absorbing material containing a polymer material of any one of claims 1 to 9 and claim 22.

**24.** The gas-absorbing material according to claim 23, further containing a filler.

**25.** The gas-absorbing material according to claim 24, wherein the filler is a powder.

**26.** The gas-absorbing material according to claim 24 or 25, wherein the filler is fine particles having a primary particle diameter of 1000 nm or less.

**27.** The gas-absorbing material according to claim 26, wherein the water contact angle of the fine particles is 70° or more.

**28.** The gas-absorbing material according to any one of claims 24 to 27, wherein the filler is a fumed silica.

**29.** The gas-absorbing material according to any one of claims 24 to 27, wherein the filler is a fumed silica treated for water repellency.

**30.** A gas-absorbing cartridge filled with a gas-absorbing material of any one of claims 23 to 29.

**31.** A gas supply unit containing a gas-absorbing material of any one of claims 23 to 29.

**32.** A gas recovery unit containing a gas-absorbing material of any one of claims 23 to 29.

FIG. 1

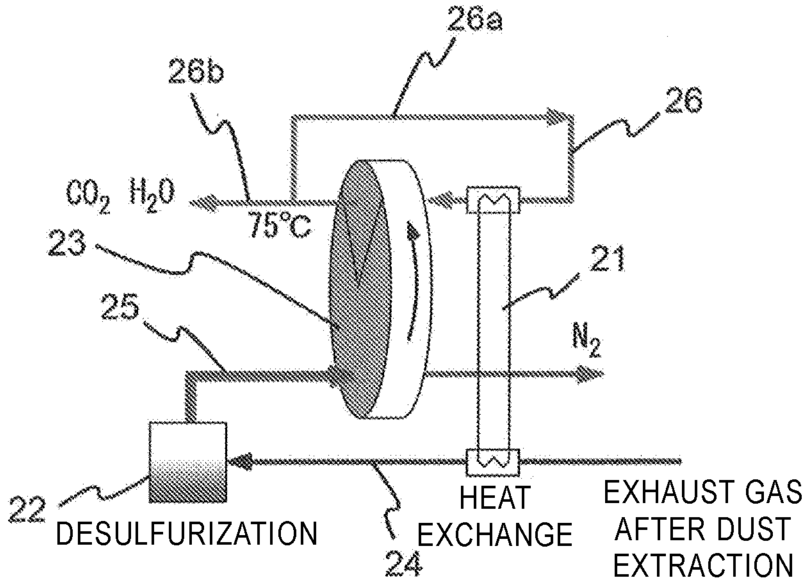
26a
26b
26
$CO_2$ $H_2O$
75°C
23
21
25
$N_2$
22
DESULFURIZATION
24
HEAT EXCHANGE
EXHAUST GAS AFTER DUST EXTRACTION

FIG. 2

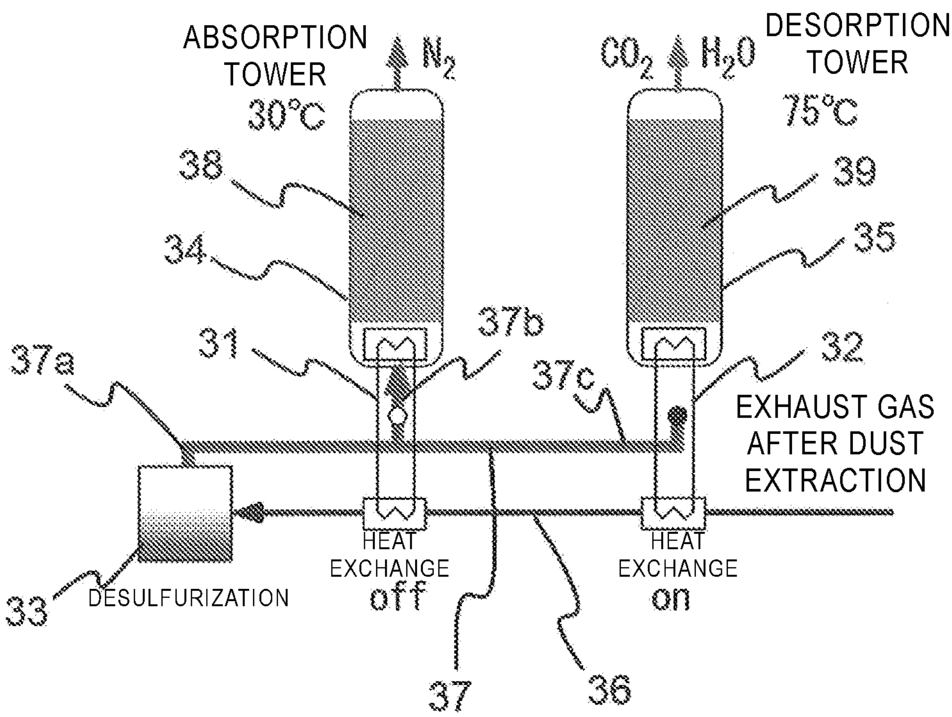
ABSORPTION TOWER
$N_2$
30°C
$CO_2$ $H_2O$
DESORPTION TOWER
75°C
38
39
34
35
37a
31
37b
37c
32
EXHAUST GAS AFTER DUST EXTRACTION
33
DESULFURIZATION
HEAT EXCHANGE
off
HEAT EXCHANGE
on
37
36

FIG. 3

PARTICLE SIZE DISTRIBUTION OF MIXTURE OF DIFFERENT TYPE OF POLYMER GROUND PRODUCT AND RY300

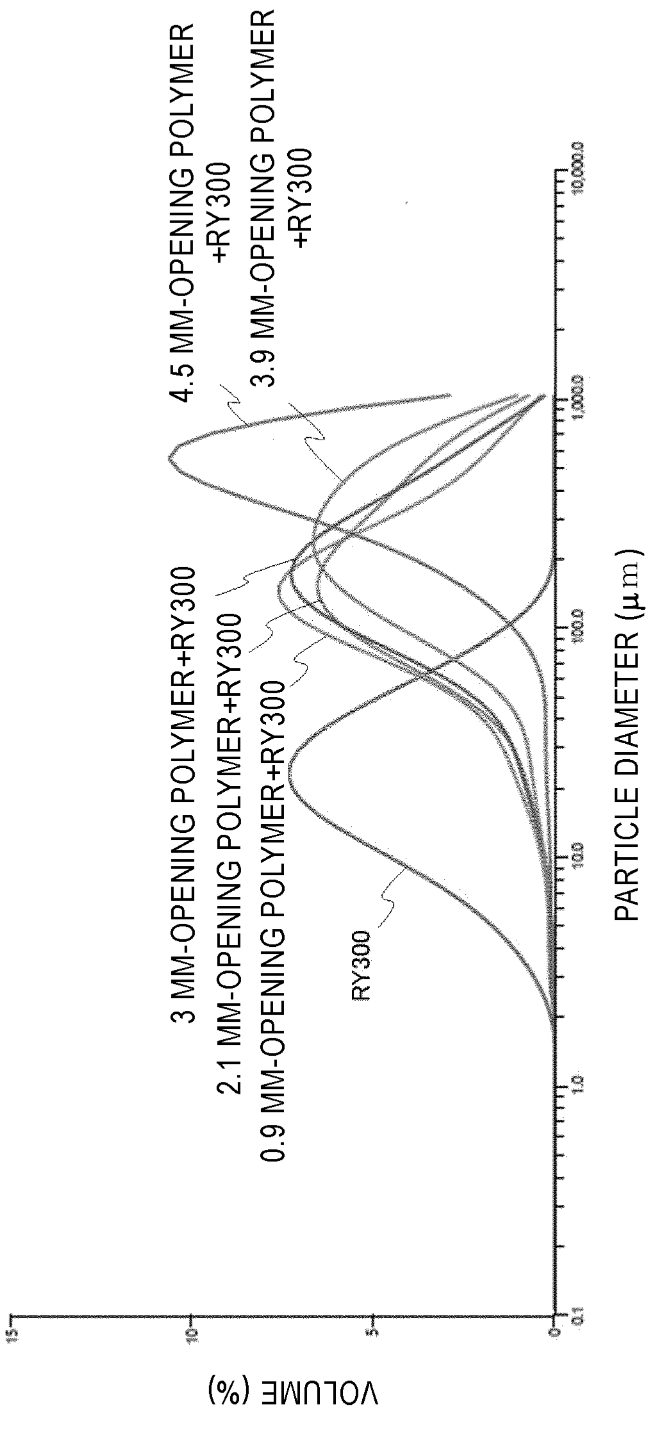

FIG. 4

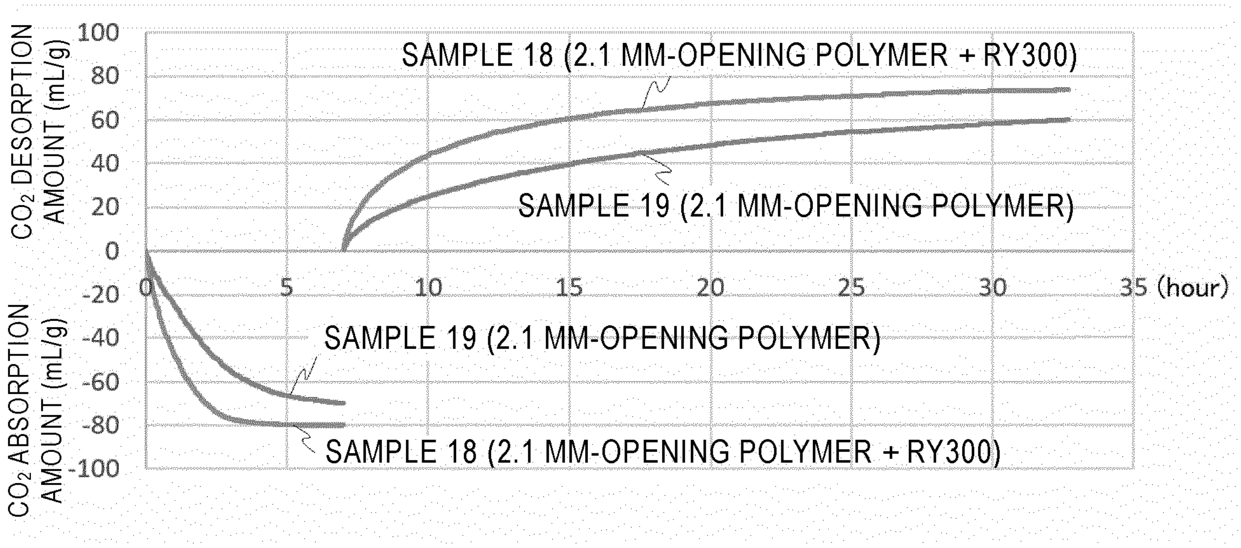
CO2 DESORPTION AMOUNT (mL/g)
CO2 ABSORPTION AMOUNT (mL/g)
100
80
60
40
20
0
-20
-40
-60
-80
-100
0
5
10
15
20
25
30
35 (hour)
SAMPLE 18 (2.1 MM-OPENING POLYMER + RY300)
SAMPLE 19 (2.1 MM-OPENING POLYMER)
SAMPLE 19 (2.1 MM-OPENING POLYMER)
SAMPLE 18 (2.1 MM-OPENING POLYMER + RY300)

FIG. 5

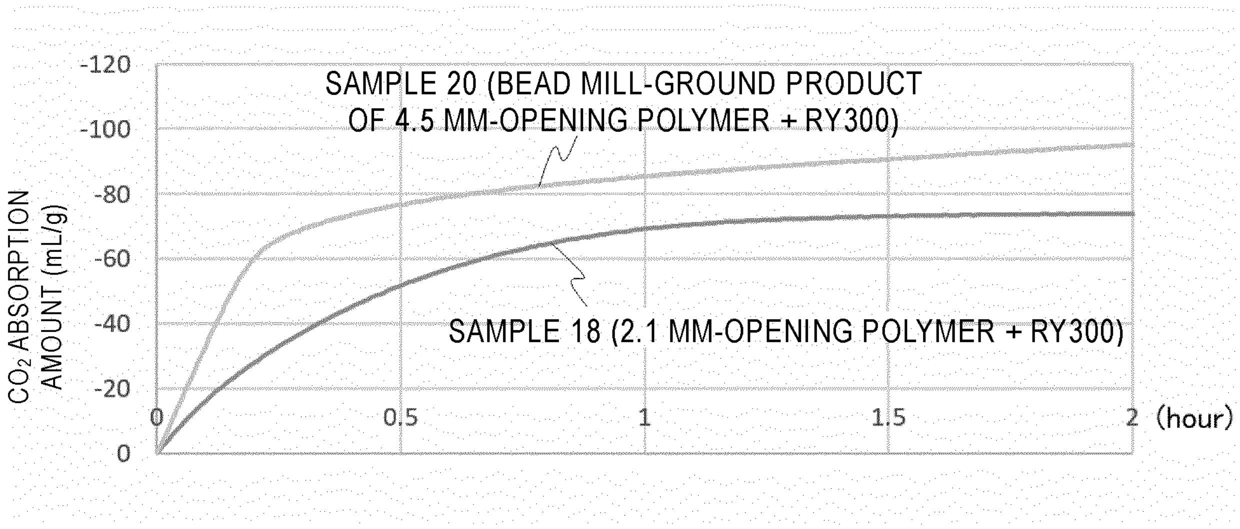
CO2 ABSORPTION AMOUNT (mL/g)
-120
-100
-80
-60
-40
-20
0
0
0.5
1
1.5
2 (hour)
SAMPLE 20 (BEAD MILL-GROUND PRODUCT OF 4.5 MM-OPENING POLYMER + RY300)
SAMPLE 18 (2.1 MM-OPENING POLYMER + RY300)

## INTERNATIONAL SEARCH REPORT

International application No. PCT/JP2020/020079

A. CLASSIFICATION OF SUBJECT MATTER
B01J 20/26(2006.01)i; B01J 20/30(2006.01)i; C08F 20/60(2006.01)i; C08F 220/60(2006.01)i
FI: B01J20/26 A ZAB; B01J20/30; C08F20/60; C08F220/60
According to International Patent Classification (IPC) or to both national classification and IPC

B. FIELDS SEARCHED
Minimum documentation searched (classification system followed by classification symbols)
B01J20/26; B01J20/30; C08F20/60; C08F220/60

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2016/024633 A1 (KYUSHU UNIVERSITY) 18.02.2016 (2016-02-18) entire text, all drawings | 1-32 |
| A | HOSHINO, Yu, et al., "Reversible Absorption of CO2 Triggered by Phase Transition of Amine-Containing Micro-and Nanogel Particles", Journal of the American Chemical Society, 134, 23 October 2012, pp. 18177-18180, ISSN 0002-7863 in particular, pp. 18178, left column, fig. 2-3 | 1-32 |
| A | JP 2012-219172 A (MITSUI CHEMICALS, INC.) 12.11.2012 (2012-11-12) paragraphs [0139]-[0142] | 1-32 |
| A | JP 2001-353442 A (SUMITOMO SEIKA CHEMICALS CO., LTD.) 25.12.2001 (2001-12-25) paragraphs [0034], [0042] | 1-32 |
| A | JP 2015-512763 A (BRITISH AMERICAN TOBACCO (INVESTMENTS) LTD.) 30.04.2015 (2015-04-30) claims 1-56 | 1-32 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 July 2020 (22.07.2020) | 04 August 2020 (04.08.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/020079

C (Continuation). DOCUMENTS CONSIDERED TO BE RELEVANT

| Category* | Citation of document, with indication, where appropriate, of the relevant passages | Relevant to claim No. |
|---|---|---|
| A | JP 2017-47412 A (HITACHI CHEMICAL CO., LTD.) 09.03.2017 (2017-03-09) entire text, all drawings | 1-32 |
| A | JP 2017-509744 A (KYOTO UNIVERSITY) 06.04.2017 (2017-04-06) entire text, all drawings | 1-32 |

Form PCT/ISA/210 (continuation of second sheet) (January 2015)

**INTERNATIONAL SEARCH REPORT**
Information on patent family members

International application No.
PCT/JP2020/020079

| Patent Documents referred in the Report | Publication Date | Patent Family | Publication Date |
|---|---|---|---|
| WO 2016/024633 A1 | 18 Feb. 2016 | US 2017/0259245 A1<br>entire text, all drawings<br>EP 3181223 A1 | |
| JP 2012-219172 A | 12 Nov. 2012 | (Family: none) | |
| JP 2001-353442 A | 25 Dec. 2001 | (Family: none) | |
| JP 2015-512763 A | 30 Apr. 2015 | US 2013/0139834 A1<br>claims 1-34<br>WO 2013/108001 A1<br>EP 2804683 A1<br>CN 104053483 A<br>KR 10-2014-0119107 A | |
| JP 2017-47412 A | 09 Mar. 2017 | (Family: none) | |
| JP 2017-509744 A | 06 Apr. 2017 | US 2016/0367948 A1<br>entire text, all drawings<br>WO 2015/129925 A1<br>EP 3110879 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016024633 A
- WO 2017146231 A